# EUROPÄISCHE PATENTSCHRIFT

(11) **EP 3 413 204 B1**
(45) Veröffentlichungstag und Bekanntmachung des Hinweises auf die Patenterteilung: **08.05.2019**
(21) Anmeldenummer: 17175193.6
(22) Anmeldetag: 09.06.2017
(51) Int. Cl.: G06F 13/12, G06F 15/78

(54) **VERFAHREN ZUR PARALLELEN VERWALTUNG KONTINUIERLICHER UND TASKSYNCHRONER EINGANGSDATEN EINES ECHTZEITSYSTEMS**
METHOD FOR PARALLEL ADMINISTRATION OF CONTINUOUS AND TASK-SYNCHRONOUS INPUT DATA OF A REAL-TIME SYSTEM
PROCÉDÉ D'ADMINISTRATION PARALLÈLE DE DONNÉES D'ENTRÉE CONTINUES ET À SYNCHRONISATION DE TÂCHES D'UN SYSTÈME EN TEMPS RÉEL

(43) Veröffentlichungstag der Anmeldung: 12.12.2018
(73) Patentinhaber: dSPACE digital signal processing and control engineering GmbH, 33102 Paderborn (DE)
(72) Erfinder: Fromme, Matthias, 33161 Hövelhof (DE); Sauer, Jochen, 33034 Brakel (DE); Schmitz, Matthias, 33129 Delbrück (DE)

(56) Entgegenhaltungen:
- EP-A1- 2 799 983
- EP-B1- 3 015 995
- WO-A1-2015/185505
- RAMONA DUELKS ET AL: "A Real-Time Test and Simulation Environment Based on Standard FPGA Hardware", TESTING: ACADEMIC AND INDUSTRIAL CONFERENCE - PRACTICE AND RESEARCH TECHNIQUES, 2009. TAIC PART '09, IEEE, PISCATAWAY, NJ, USA, 4. September 2009 (2009-09-04), Seiten 197-204, XP031611115, ISBN: 978-0-7695-3820-4

## Beschreibung

Die Erfindung betrifft Schnittstelleneinheiten für den Datenaustausch zwischen einem Computersystem und einer Peripherie.

In der Entwicklung sicherheitskritischer eingebetteter Systeme, beispielsweise von Steuergeräten für den Einsatz in Automobilen, Luftfahrzeugen, Industrierobotern oder medizinischen Geräten, ist es üblich, vor der Serienfertigung eines eingebetteten Systems unter Einsatz eines echtzeitfähigen Computersystems dessen korrekte Funktion zu testen. Bei einem Hardware-inthe-Loop-Test, kurz HIL-Test, emuliert das Computersystem eine Umwelt des eingebetteten Systems. Dabei liest das Computersystem die von dem eingebetteten System ausgegebenen Steuersignale aus, berechnet auf deren Basis in harter Echtzeit Eingangssignale für das eingebettete System und speist die Eingangssignale in dessen Dateneingänge ein. Das eingebettete System arbeitet demnach in einer weitgehend virtuellen Umgebung, in der es gefahrlos und unter reproduzierbaren Bedingungen testbar ist.

Ein dazu komplementäres Testverfahren ist das Rapid Control Prototyping, kurz RCP. Hierbei übernimmt das Computersystem die Rolle des eingebetteten Systems selbst. Das Computersystem ist in diesem Fall eine generische Hardware, die mit einer prototypischen Steuersoftware programmiert ist, um die Steuersoftware in einer realen Umgebung, beispielsweise einem Testfahrzeug auf einer Teststrecke, auf korrekte Funktion zu überprüfen.

In beiden Szenarien ist der Datenaustausch mit einer Peripherie in harter Echtzeit eine unverzichtbare Funktion des Computersystems. Die Vermittlung zwischen der Peripherie und dem zentralen Prozessor des Computersystems übernimmt dabei eine Schnittstelleneinheit, die meistens als steckbare I/O-Karte ausgestaltet ist. In jüngerer Zeit ist eine Nachfrage nach immer größeren Echtzeit-Computersystemen bemerkbar, die eine große Anzahl von Schnittstelleneinheiten umfassen. In derartigen Systemen ist es sinnvoll, zur Entlastung des zentralen Prozessors die Schnittstelleneinheiten mit programmierbaren Prozessoren auszustatten und Funktionalitäten zur Ansteuerung der Schnittstelleneinheiten, zur Vorverarbeitung von Eingangsdaten u.a. in die Schnittstelleneinheiten auszulagern.

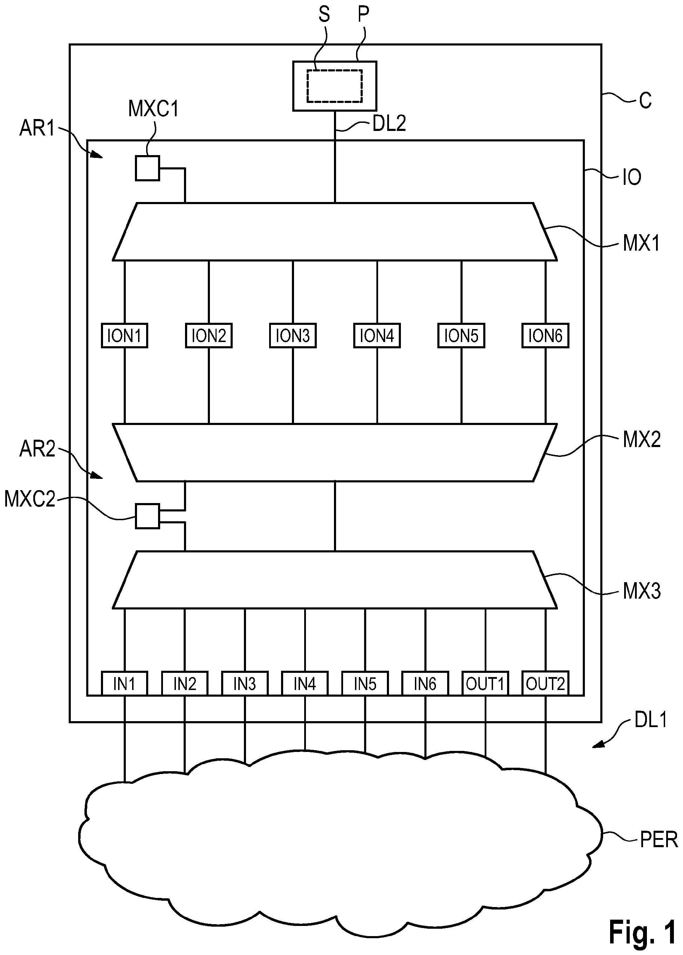

Die europäische Patentschrift EP 3 015 995 B1 der Anmelderin offenbart eine entsprechend ausgestaltete Schnittstelleneinheit. Um die Weiterleitung von Eingangsdaten an den zentralen Prozessor latenz- und jitterarm auszugestalten, schlägt die Patentschrift vor, auf der Schnittstelleneinheit eine Anzahl parallel rechnender Schnittstellenprozessoren zu hinterlegen. Jeder in dem aktuellen Testszenario benötigte Schnittstellenprozessor wird eindeutig einer Task auf dem zentralen Prozessor zugewiesen, d.h. arbeitet allein dieser Task zu. Jede Task schreibt die Softwareroutinen zur Programmierung der Schnittstellenprozessoren selber, fügt sie zu kompakten Befehlssequenzen zusammen und programmiert die ihr zugewiesenen Schnittstellenprozessoren mit den Befehlssequenzen. Die kompakten Befehlssequenzen werden dabei von den Schnittstellenprozessoren im Normalfall vollständig ausgeführt und sind nicht unterbrechbar. Die Gegenstand der Patentschrift wird in der Beschreibung der Figur 1 näher erläutert.

Die in der Patentschrift beschriebene Vorgehensweise ist aber wiederum problematisch, wenn die Schnittstelleneinheit zur Übertragung eines kontinuierlichen Datenstroms an eine Task eingerichtet werden soll. In dem in der zitierten Patentschrift beschriebenen Verfahren sind die Schnittstellenprozessoren für die tasksynchrone Datenübertragung eingerichtet. Der Begriff "tasksynchron" ist so zu verstehen, dass die Abarbeitung der Softwareroutinen auf einem Schnittstellenprozessor mit der Task synchronisiert ist, für die die auf den jeweiligen Schnittstellenprozessor programmierten Softwareroutinen erstellt wurden und der die Softwareroutinen Eingangsdaten zuarbeiten. Wenn beispielsweise eine Task auf dem zentralen Prozessor mit einer bestimmten Zyklusrate, beispielsweise 1000 mal pro Sekunde, ausgeführt wird, dann sind die Zyklusraten der der Task zugeordneten Schnittstellenprozessoren so gewählt, dass der Task in jedem Zyklus die aktuellen von der Task erwarteten Eingangsdaten zum Auslesen zur Verfügung stehen. Um das sicherzustellen, kann jeder Zyklus eines der Task zugeordneten Schnittstellenprozessors durch ein Triggersignal ausgelöst werden, das von einem unabhängigen Zeitgeber oder von der Task selbst initiiert werden kann.

Demgegenüber ist unter kontinuierlicher Datenübertragung zu verstehen, dass ein Schnittstellenprozessor in einem Dateneingangsport hinterlegte Eingangsdaten ohne Berücksichtigung der Zyklusrate einer auf dem zentralen Prozessor ausgeführten Task an den zentralen Prozessor weiterleitet. Dem Fachmann ist diese Art der Datenübertragung als Streaming bekannt. Grundsätzlich bedeutet Streaming, dass Daten mit einer hohen Durchsatzrate von einem Sender zu einem Empfänger übertragen werden und der Sender die Übertragung kontinuierlich und ohne Rücksicht auf den Empfänger durchführt. Der Empfänger ist dabei selbst dafür verantwortlich, die Daten hinreichend schnell zu verarbeiten. Im Anwendungsbereich HIL und RCP ist die kontinuierliche, d.h. gestreamte, Datenübertragung insbesondere für die Auslesung von Signalen sinnvoll, deren Werte sich so schnell ändern, dass die Zyklusrate der das jeweilige Signal auswertenden Task für die Abtastung des Signals nicht hinreichend ist. Die Auslesung eines Sensorsignals an die Zyklusrate der auslesenden Task zu koppeln, kann zu einer Unterabtastung des Sensorsignals führen, wenn dessen zeitliche Dynamik entsprechend hoch ist. Deswegen sollte die Übertragung derartiger Sensorsignale ohne Rücksicht auf die sie verarbeitende Task mit einer Datenrate erfolgen, die eine hinreichend schnelle Abtastung des Sensorsignals sicherstellt.

Mit der in der zitierten Patentschrift offenbarten Lehre ist diese Anforderung nicht naheliegend vereinbar, weil sie vorsieht, die zur Übertragung von Eingangsdaten bestimmten Softwareroutinen vor dem Laden der Softwareroutinen auf einen Schnittstellenprozessor zu kompakten Befehlssequenzen zusammenzufügen und die kompakten Befehlssequenzen in jedem Zyklus vollständig und ohne Unterbrechung abzuarbeiten. Demnach ist es nicht möglich, für die auf einem Schnittstellenprozessor in einer Befehlssequenz zusammengefassten Softwareroutinen unterschiedliche Zykluszeiten festzulegen. Wenn eine Task sowohl tasksynchron als auch kontinuierlich übertragene Messwerte verarbeiten soll, offenbart die Patentschrift keine Lösung dafür.

Vor diesem Hintergrund ist die Aufgabe der Erfindung, eine programmierbare Schnittstelleneinheit bereitzustellen, die eine parallele Übertragung von tasksynchronen und kontinuierlichen Eingangsdaten von einer Peripherie an einen Prozessor eines Computersystems auf eine latenz- und jitterarme Weise ermöglicht. Insbesondere ist es eine Aufgabe der Erfindung, die in der EP 3 015 995 B1 offenbarte Lehre derart zu erweitern, dass sie eine Einrichtung der Schnittstelleneinheit zur kontinuierlichen Übertragung von Eingangsdaten erlaubt, ohne dabei den Jitter oder die Latenz der Schnittstelleneinheit zu verschlechtern.

Ein Gegenstand der Erfindung ist demnach ein Verfahren zur Verwaltung von Eingangsdaten eines Computersystems mittels einer Schnittstelleneinheit, die zumindest einen ersten Schnittstellenprozessor und einen zweiten Schnittstellenprozessor umfasst. Jeder Schnittstellenprozessor ist programmierbar und durch Programmierung einrichtbar, um ein von einer Peripherie des Computersystem in einem Dateneingangsport der Schnittstelleneinheit hinterlegtes Eingangsdatum auszulesen, optional vorzuverarbeiten und an einer durch einen Prozessor des Computersystems, der nicht in oder auf der Schnittstelleneinheit verbaut ist, auslesbaren Speicheradresse zu hinterlegen. Die Hinterlegung kann unmittelbar durch einen Schreibzugriff eines Schnittstellenprozessors auf die durch den Prozessor des Computersystems auslesbaren Speicheradresse erfolgen. Die Hinterlegung kann alternativ auch mittelbar erfolgen, indem ein Schnittstellenprozessor nicht selbst schreibend auf die durch den Prozessor des Computersystems auslesbare Speicheradresse zugreift, sondern die Hinterlegung des Eingangsdatum an der Speicheradresse durch eine Komponente des Computersystems veranlasst.

Der Begriff "Schnittstellenprozessor" ist nicht als etablierter Fachbegriff zu verstehen. Er wird in der der vorliegenden Schrift lediglich verwendet, um den vorgesehenen Einsatz des mit dem Begriff bezeichneten Prozessors im Rahmen der Erfindung zu beschreiben. Der Begriff impliziert für sich genommen keine technischen Spezifikationen bezüglich der Prozessorarchitektur oder technischer Kennzahlen, sofern derartige Implikationen nicht ausdrücklich angegeben sind.

Zwischen der Peripherie und der Anzahl von Dateneingangsports wird eine erste Datenverbindung eingerichtet, und die Peripherie wird eingerichtet, um mittels der ersten Datenverbindung Eingangsdaten in zumindest einem Dateneingangsport zu hinterlegen. Für die Hinterlegung von Eingangsdaten an einer durch den Prozessor des Computersystems auslesbaren Speicheradresse wird eine zweite Datenverbindung zwischen der Schnittstelleneinheit und dem Prozessor des Computersystems eingerichtet.

Der Prozessor des Computersystems wird mit einer Software programmiert, die zumindest eine zur Verarbeitung von durch die Schnittstelleneinheit weitergeleiteten Eingangsdaten eingerichtete erste Task umfasst. Um die Schnittstelleneinheit zur Weiterleitung von Eingangsdaten an die erste Task einzurichten, werden Softwareroutinen erstellt und auf die Schnittstellenprozessoren geladen. Dabei werden erfindungsgemäß zumindest zwei Softwareroutinen erstellt, von denen jede eingerichtet ist, um einen Schnittstellenprozessor für das Auslesen eines Eingangsdatums aus einem Dateneingangsport der Schnittstelleneinheit und für die Hinterlegung des Eingangsdatums an einer durch den Prozessor des Computersystems auslesbaren Speicheradresse zu programmieren. Optional kann jede Softwareroutine zusätzlich eingerichtet sein, um das Eingangsdatum vor der Hinterlegung durch Vorverarbeitung zu manipulieren.

Zur Lösung des der Erfindung zugrundeliegenden Problems ist vorgesehen, Softwareroutinen zur kontinuierlichen und zur tasksynchronen Datenübertragung auf der Schnittstelleneinheit voneinander zu trennen, sodass ein bestimmter Schnittstellenprozessor oder zumindest ein einzelner Kern eines Schnittstellenprozessors entweder mit tasksynchroner oder mit kontinuierlicher Weiterleitung von Eingangsdaten beaufschlagt ist. Zu diesem Zweck wird vor der Programmierung der Schnittstellenprozessoren eine erste Untermenge der erstellten Softwareroutinen einer ersten Kategorie zugeordnet und eine zweite Untermenge der erstellten Softwareroutinen einer zweiten Kategorie zugeordnet. Der erste Schnittstellenprozessor wird mit der ersten Untermenge und der zweite Schnittstellenprozessor mit der zweiten Untermenge von Softwareroutinen programmiert.

Nach dem Abschluss der Programmierung der Schnittstellenprozessoren wird die Abarbeitung der Software durch den Prozessor des Computersystems gestartet. Mit dem Start der Abarbeitung der Software wird auch die Abarbeitung der Softwareroutinen durch die Schnittstellenprozessoren gestartet, und im folgenden werden, parallel zur Abarbeitung der Software, die Softwareroutinen zyklisch von den Schnittstellenprozessoren abgearbeitet. Dabei wird der erste Schnittstellenprozessor eingerichtet, die erste Untermenge mit einer ersten Zyklusrate abzuarbeiten, und der zweite Schnittstellenprozessor wird eingerichtet, die zweite Untermenge mit einer zweiten Zyklusrate abzuarbeiten. Sowohl der erste als auch der zweite Schnittstellenprozessor arbeiten dabei der ersten Task zu, d.h. die erste Task ist eingerichtet, um während der Abarbeitung der Software die von der ersten Untermenge und von der zweiten Untermenge hinterlegten Eingangsdaten auszulesen und zu verarbeiten.

Ein wichtiges Merkmal der Erfindung ist demnach, dass die für die Schnittstellenprozessoren vorgesehenen Softwareroutinen schon vor dem Herunterladen auf die Schnittstellenprozessoren in zwei Kategorien unterteilt werden. Je nachdem, ob eine Softwareroutine für tasksynchrone oder für kontinuierliche Datenübertragung vorgesehen ist, wird sie der ersten oder der zweiten Kategorie zugeordnet, und die Softwareroutinen der ersten und der zweiten Kategorie werden auf unterschiedliche Schnittstellenprozessoren geladen. Dementsprechend erfolgt die zyklische Abarbeitung der Softwareroutinen auf dem ersten und dem zweiten Schnittstellenprozessor mit unterschiedlichen Zyklusraten. Beispielsweise ist die erste Zyklusrate synchron zu der Zyklusrate der ersten Task gewählt. Darunter ist insbesondere eine Wahl der ersten Zyklusrate zu verstehen, die sicherstellt, dass die erste Task in jedem Zyklus die Eingangsdaten vorfindet, für deren Hinterlegung der erste Schnittstellenprozessor durch seine Programmierung eingerichtet ist, und dass diese Eingangsdaten pro Zyklus der ersten Task genau einmal mit aktuellen Werten überschrieben werden. Zu diesem Zweck kann beispielsweise jede neue Abarbeitung der ersten Untermenge durch einen innerhalb oder außerhalb des ersten Schnittstellenprozessors angeordneten programmierbaren Zeitgeber veranlasst werden. Eine andere Möglichkeit ist, dass die erste Task einmal pro Zyklus die Versendung eines Triggersignals an den ersten Schnittstellenprozessor veranlasst und der erste Schnittstellenprozessor eingerichtet ist, als Reaktion auf das Triggersignal eine neue Abarbeitung der ersten Untermenge zu beginnen.

Demgegenüber ist der zweite Schnittstellenprozessor vorgesehen, um Eingangsdaten aus zumindest einem Dateneingangsport kontinuierlich zu übertragen. Dementsprechend wird die zweite Zyklusrate bevorzugt synchron zu einer Datenhinterlegungsrate gewählt, mit der Eingangsdaten in einem Dateneingangsport, aus dem der zweite Schnittstellenprozessor aufgrund seiner Programmierung Eingangsdaten ausliest, hinterlegt werden. Besonders bevorzugt wird die zweite Zyklusrate so gewählt, dass Eingangsdaten, die mit einer höheren Datenhinterlegungsrate als die Zyklusrate der ersten Task in einem Dateneingangsport hinterlegt werden, vollständig von dem zweiten Schnittstellenprozessor weitergeleitet und für die erste Task auslesbar hinterlegt werden. Die Auslesung und Hinterlegung der Eingangsdaten durch den zweiten Prozessor geschieht demnach unabhängig von der Zyklusrate der ersten Task, und die erste Task findet in jedem Zyklus der ersten Task alle nach Abschluss des jeweils letzten Zyklus in dem Dateneingangsport hinterlegten Eingangsdaten vor. Die zweite Zyklusrate kann beispielsweise synchron zu einer Datenhinterlegungsrate gewählt sein, mit der ein Analog-Digital-Wandler von einem Sensor ausgelesene Messwerte in dem Dateneingangsport hinterlegt.

Unter einem Zyklus einer Task ist eine abschließende Abarbeitung der Task nach einem zyklisch wiederholten Aufruf der Task zu verstehen. Unter einem Zyklus eines Schnittstellenprozessors ist eine abschließende Abarbeitung einer Anzahl von auf den Schnittstellenprozessor programmierten Softwareroutinen nach einem zyklisch wiederholten Aufruf des Schnittstellenprozessors zu verstehen, insbesondere eines Aufrufs durch ein Triggersignal. Unter einer Zyklusrate ist eine gemittelte Anzahl von Zyklen pro Zeiteinheit zu verstehen. Der zeitliche Abstand zwischen zwei aufeinander folgenden Zyklen, insbesondere eines Schnittstellenprozessors, ist nicht zwangsläufig konstant.

Besonders vorteilhaft ist das Verfahren, wenn die Schnittstellenprozessoren eingerichtet sind, die auf sie programmierten Softwareroutinen in jedem Zyklus eines Schnittstellenprozessors jeweils in ihrer Gesamtheit und ohne Unterbrechung abzuarbeiten. In der EP 3 015 995 B1 ist das beispielsweise dadurch gegeben, dass die für einen Schnittstellenprozessor erstellten Softwareroutinen vor deren Programmierung auf den Schnittstellenprozessor zu einer kompakten, nicht unterbrechbaren Sequenz von Maschinenbefehlen zusammengefasst werden, und die Schnittstellenprozessoren werden eingerichtet, die jeweilige Sequenz in jedem Zyklus vollständig abzuarbeiten und dabei jeden in der Sequenz enthaltenen Maschinenbefehl höchstens ein mal auszuführen. Daraus folgt, dass alle auf einen Schnittstellenprozessor geladenen Softwareroutinen zwangsläufig mit der gleichen Zyklusrate ausgeführt werden.

Der Lehre der EP 3 015 995 B1 folgend ist es weiterhin bevorzugt, dass die Software auf dem Prozessor des Computersystems zumindest noch eine zweite Task umfasst, die Eingangsdaten aus der Peripherie ausliest und verarbeitet, und dass der ersten und der zweiten Task jeweils zumindest ein Schnittstellenprozessor zugeordnet wird. Unter dieser Zuordnung ist zu verstehen, dass die von einem einer Task zugeordneten Schnittstellenprozessor hinterlegten Eingangsdaten ausschließlich von der Task ausgelesen werden, der der Schnittstellenprozessor zugeordnet ist. In dieser Ausgestaltung ist vorgesehen, dass die der ersten und der zweiten Task zugeordneten Schnittstellenprozessoren, insbesondere alle einer Task zugeordneten Schnittstellenprozessoren, mit Softwareroutinen der ersten Kategorie programmiert werden, und dass die Softwareroutinen der zweiten Kategorie auf Schnittstellenprozessoren verteilt und programmiert werden, die keiner Task zugeordnet sind. Besonders bevorzugt werden die einer Task zugeordneten Schnittstellenprozessoren ausschließlich mit Softwareroutinen der ersten Kategorie programmiert, und die keiner Task zugeordneten Schnittstellenprozessoren werden ausschließlich mit Softwareroutinen der zweiten Kategorie programmiert oder werden gar nicht programmiert.

Der Vorteil dieser Ausgestaltung der Erfindung ist ihre gute Verträglichkeit mit der Lehre der EP 3 015 995 B1. Die für tasksynchrone Datenübertragung vorgesehenen Softwareroutinen der ersten Kategorie sind gemäß der Lehre der zitierten Patentschrift auf die Schnittstellenprozessoren verteilbar, und die für kontinuierliche Datenübertragung vorgesehenen Softwareroutinen der zweiten Kategorie sind in einem nachfolgenden Verfahrensschritt auf die Schnittstellenprozessoren verteilbar, die nicht für die tasksynchrone Datenübertragung in Beschlag genommen sind. Auf diese Weise ist eine gemäß der zitierten Patentschrift programmierte Schnittstelleneinheit für kontinuierliche Datenübertragung einrichtbar, wobei die durch die Lehre der zitierten Patentschrift erreichten Vorteile bezüglich des Jitters und der Latenz erhalten bleiben.

Weiterhin ist bevorzugt, dass die Softwareroutinen für die Programmierung von Schnittstellenprozessoren zur Hinterlegung der Eingangsdaten, zu deren Auslesung die erste Task eingerichtet ist, von der ersten Task erstellt werden und die erste Task jede von ihr selbst erstellte Softwareroutine der ersten Kategorie oder der zweiten Kategorie zuordnet, und dass auf analoge Weise auch die zweite Task, insbesondere jede Task, die zur Auslesung von Eingangsdaten von der Peripherie eingerichtet ist, ihre Softwareroutinen selbst erstellt und jeweils der ersten oder der zweiten Kategorie zuordnet.

Die Verteilung der Softwareroutinen der zweiten Kategorie auf die keiner Task zugeordneten Schnittstellenprozessoren geschieht bevorzugt nicht willkürlich, sondern unter Berücksichtigung der Anforderungen an die Schnittstelleneinheit bezüglich ihrer Echtzeittauglichkeit. Wegen der im Regelfall hohen Durchsatzrate kontinuierlicher Datenströme arbeiten die mit Softwareroutinen der zweiten Kategorie programmierten Schnittstellenprozessoren im Regelfall mit einer hohen Zyklusrate, was bei unbedachter Programmierung leicht zu einer Überlastung einzelner Schnittstellenprozessoren führen kann. Um das zu verhindern, wird in einer vorteilhaften Ausgestaltung für jeden Schnittstellenprozessor, der mit Softwareroutinen der zweiten Kategorie programmiert ist bzw. für die Programmierung mit Softwareroutinen der zweiten Kategorie vorgesehen ist, eine akzeptable Auslesezeit festgelegt. Die akzeptable Auslesezeit eines Schnittstellenprozessors ist eine maximale Zeitspanne für die Abarbeitung der Gesamtheit aller auf den Schnittstellenprozessor programmierten Softwareroutinen der zweiten Kategorie. In einer einfachen Ausführung ist die maximale Auslesezeit für alle Schnittstellenprozessoren identisch fest vorgegeben. Beispielsweise kann sich die maximale Auslesezeit an der maximalen Datenrate orientieren, mit der Eingangsdaten in einem Dateneingangsport hinterlegbar sind. In einer anderen Ausführung kann die maximale Auslesezeit für jeden Schnittstellenprozessor flexibel festlegbar sein, beispielsweise durch einen Anwender anhand einer Konfigurationssoftware. Die Softwareroutinen der zweiten Kategorie werden dann derart auf die Schnittstellenprozessoren verteilt, dass für jeden Schnittstellenprozessor, der mit Softwareroutinen der zweiten Kategorie programmiert ist, die maximale Abarbeitungszeit der Gesamtheit aller auf den Schnittstellenprozessor programmierten Softwareroutinen der zweiten Kategorie kleiner ist als die akzeptable Auslesezeit des Schnittstellenprozessors. Besonders vorteilhaft geschieht die Verteilung der Softwareroutinen der zweiten Kategorie derart, dass die maximale Abarbeitungszeit kleiner als die akzeptable Auslesezeit abzüglich einer zeitlichen Ungenauigkeit ist, die beispielsweise durch einen Jitter des Schnittstellenprozessors gegeben sein kann.

Die maximale Abarbeitungszeit ist die größtmögliche Zeitspanne, die ein Schnittstellenprozessor für die Abarbeitung aller auf den Schnittstellenprozessor programmierten Softwareroutinen der zweiten Kategorie benötigt. Die maximale Abarbeitungszeit eines Schnittstellenprozessors ist vorhersagbar, wenn die Taktung des Schnittstellenprozessors und die maximale Anzahl der in einem Zyklus abzuarbeitenden Prozessorbefehle bekannt ist. Die letztgenannte Bedingung ist erfüllt, wenn jede auf einen Schnittstellenprozessor programmierte Softwareroutine genau einmal abgearbeitet wird und die Softwareroutinen keine Schleifen oder Rücksprünge enthalten.

Grundsätzlich ist die Verteilung der Softwareroutinen der zweiten Kategorie auf die Schnittstellenprozessoren manuell oder automatisch durchführbar. Wenn die akzeptable Auslesezeit für alle Schnittstellenprozessoren oder zumindest für alle Schnittstellenprozessoren, die für die Programmierung mit Softwareroutinen der zweiten Kategorie zur Verfügung stehen, identisch festgelegt ist, dann kann eine automatische Verteilung derart geschehen, dass eine Software-Verteilungsroutine versucht, die Softwareroutinen der zweiten Kategorie möglichst gleichmäßig auf die Schnittstellenprozessoren zu verteilen, sodass die Differenz zwischen der größten und der kleinsten maximalen Abarbeitungszeit von allen mit Softwareroutinen der zweiten Kategorie programmierten Schnittstellenprozessoren minimal ist.

Eine flexible Festlegung der akzeptablen Auslesezeiten der Schnittstellenprozessoren erfolgt besonders vorteilhaft derart, dass ein Anwender, beispielsweise anhand einer Konfigurationssoftware, für einzelne Dateneingangsports der Schnittstelleneinheit jeweils eine akzeptable Auslesezeit festlegt. Welcher Wert der akzeptablen Auslesezeit für einen gegebenen Dateneingangsport sinnvoll ist, kann beispielsweise von der Geschwindigkeit abhängen, mit der eine Hardware, z.B. ein Analog-Digital-Wandler, Daten in dem Dateneingangsport hinterlegt. Die für die Dateneingangsports festgelegte akzeptable Auslesezeit wird dann an die Schnittstellenprozessoren vererbt. Die Vererbung kann beispielsweise derart geschehen, dass die akzeptable Auslesezeit jedes Schnittstellenprozessors, der mit Softwareroutinen der zweiten Kategorie programmiert wird, gleich der kleinsten akzeptablen Auslesezeit aller Dateneingangsports gewählt wird, aus denen der Schnittstellenprozessor aufgrund seiner Programmierung Eingangsdaten ausliest. Allgemein muss für jeden mit Softwareroutinen der zweiten Kategorie programmierten Schnittstellenprozessor überprüft werden, ob die maximale Abarbeitungszeit des jeweiligen Schnittstellenprozessors kleiner als die akzeptable Auslesezeit aller Dateneingangsports ist, aus denen der Schnittstellenprozessor aufgrund seiner Programmierung Eingangsdaten ausliest.

Eine manuelle Verteilung der Softwareroutinen der zweiten Kategorie erfolgt bevorzugt anhand einer Konfigurationssoftware, die beispielsweise eine graphische Bedienoberfläche zur manuellen Verteilung der Softwareroutinen der zweiten Kategorie bereitstellt. Die Konfigurationssoftware gibt einem Anwender bevorzugt Rückmeldung über die Anzahl der Schnittstellenprozessoren, die nach der Programmierung der Schnittstelleneinheit mit den Softwareroutinen der ersten Kategorie noch für die Softwareroutinen der zweiten Kategorie zur Verfügung stehen, über die Anzahl der Softwareroutinen der zweiten Kategorie, die auf die Schnittstellenprozessoren zu verteilen sind, und über die Abarbeitungszeit jeder Softwareroutine der zweiten Kategorie. Besonders vorteilhaft gibt die Konfigurationssoftware auch Rückmeldung über die akzeptable Auslesezeit jedes zur Verfügung stehenden Schnittstellenprozessors oder gibt zumindest Rückmeldung, wenn die Abarbeitungszeit aller zur Programmierung auf einen Schnittstellenprozessor vorgesehenen Softwareroutinen der zweiten Kategorie größer ist als die akzeptable Auslesezeit des Schnittstellenprozessors, insbesondere abzüglich einer zeitlichen Ungenauigkeit.

Die Zeichnungen mit den nachfolgenden Beschreibungen beschreiben ein vorteilhaftes Ausführungsbeispiel der Erfindung. Dabei sind gleichartige Teile mit gleichen Bezugszeichen versehen. Es zeigen
- Figur 1: ein Computersystem mit einer zur Durchführung des Verfahrens eingerichteten Schnittstelleneinheit;
- Figur 2: ein Schaubild der Erstellung der Softwareroutinen und der Verteilung der Softwareroutinen der ersten Kategorie auf die Schnittstellenprozessoren; und
- Figur 3: ein Schaubild der Verteilung der Softwareroutinen der zweiten Kategorie auf die Schnittstellenprozessoren; und
- Figur 4: ein Schaubild der Verteilung der Softwareroutinen der zweiten Kategorie auf die Schnittstellenprozessoren unter Berücksichtigung der Abarbeitungszeiten.

Die Abbildung der Figur 1 zeigt ein aus dem Stand der Technik bekanntes Computersystem C mit einem Prozessor P und einer Schnittstelleneinheit IO, die das Computersystem C mit einer Peripherie PER verbindet und eingerichtet ist, um Eingangsdaten von der Peripherie PER an den Prozessor P weiterzuleiten und um Ausgangsdaten von dem Prozessor P an die Peripherie PER weiterzuleiten. Die Schnittstelleneinheit umfasst beispielhaft acht Datenports, von denen sechs als Dateneingangsports IN1, ..., IN6 und zwei als Datenausgangsports OUT1, OUT2 eingerichtet sind. Eine eine Vielzahl von Datenkabeln umfassende erste Datenverbindung DL1 verbindet die Dateneingangsports IN1, ..., IN6 und die Datenausgangsports OUT1, OUT2 mit der Peripherie PER. Mittels der ersten Datenverbindung DL1 sind Eingangsdaten durch die Peripherie PER in den Dateneingangsports IN1, ..., IN6 hinterlegbar und in den Datenausgangsports OUT1, OUT2 hinterlegte Ausgangsdaten durch die Peripherie PER auslesbar.

Die Schnittstelleneinheit IO umfasst beispielhaft sechs programmierbare, jeweils einen einzigen Prozessorkern umfassende Schnittstellenprozessoren ION1, ..., ION6. Eine zweite Datenverbindung DL2 verbindet die Schnittstellenprozessoren ION1, ..., ION6 mit dem Prozessor P. Ein erster Arbiter AR1, umfassend eine erste Steuereinheit MXC1 und einen ersten Multiplexer MX1, vermittelt den Zugriff der Schnittstellenprozessoren ION1, ..., ION6 auf die zweite Datenverbindung DL2. Um Zugriff auf die zweite Datenverbindung DL2 zu erhalten, muss jeder Schnittstellenprozessor ION1, ..., ION6 den Zugriff bei der Steuereinheit MXC1 beantragen. Der erste Multiplexer MX1 ist angeordnet, um einem der Schnittstellenprozessoren Zugriff auf die zweite Datenverbindung DL2 zu geben, und die erste Steuereinheit MXC1 ist eingerichtet, den ersten Multiplexer MX1 anzusteuern, eine Anfrage auf Zugriff zu der zweiten Datenverbindung DL2 zu registrieren und dem anfragenden Schnittstellenprozessor mittels des ersten Multiplexers MX1 Zugriff auf die zweite Datenverbindung zu erteilen. Auf der ersten Steuereinheit MXC1 ist für jeden der Schnittstellenprozessoren ION1, ..., ION6, der mit mindestens einer Softwareroutine programmiert ist, eine Priorität hinterlegt, und die erste Steuereinheit MXC1 ist eingerichtet, den Zugriff zuerst dem Schnittstellenprozessor mit der höheren Priorität zu erteilen, wenn von zwei Schnittstellenprozessoren eine Anfrage auf Zugriff auf die zweite Datenverbindung DL2 vorliegt.

Ein zweiter Arbiter AR2 umfasst eine zweite Steuereinheit MXC2, einen zweiten Multiplexer MX2 und einen dritten Multiplexer MX3 und vermittelt den Zugriff der Schnittstellenprozessoren ION1, ..., ION6 auf die Dateneingangsports IN1, ..., IN6 und die Datenausgangsports OUT1, OUT2. Der zweite Multiplexer MX2 und der dritte Multiplexer MX3 sind angeordnet, um einem der Schnittstellenprozessoren ION1, ..., ION6 Zugriff auf eines der Datenports IN1, ..., IN6, OUT1, OUT2 zu geben. Um Zugriff auf eines der Datenports zu erhalten, muss jeder der Schnittstellenprozessoren ION1, ..., ION6 den Zugriff bei der zweiten Steuereinheit MXC2 beantragen, und die zweite Steuereinheit MXC2 ist eingerichtet, den zweiten Multiplexer MX2 und den dritten Multiplexer MX3 anzusteuern, eine Anfrage auf Zugriff auf eines der Datenports IN1, ..., IN6, OUT1, OUT2 zu registrieren und mittels des zweiten Multiplexers MX2 und des dritten Multiplexers MX3 dem anfragenden Schnittstellenprozessor ION1, ..., ION6 den Zugriff zu erteilen. Die auf der ersten Steuereinheit MXC1 hinterlegten Prioritäten sind identisch auch auf der zweiten Steuereinheit MXC2 hinterlegt, und die zweite Steuereinheit MXC2 ist eingerichtet, den Zugriff zuerst dem Schnittstellenprozessor mit der höheren Priorität zu erteilen, wenn von zwei Schnittstellenprozessoren eine Anfrage auf Zugriff auf die Datenports IN1, ..., IN6, OUT1, OUT2 vorliegt.

Auf den Prozessor P ist eine Software S programmiert, die Daten mit der Peripherie PER austauscht, d.h. von der Peripherie PER hinterlegte Eingangsdaten ausliest und verarbeitet und Ausgangsdaten für die Peripherie PER berechnet und zum Auslesen durch die Peripherie PER hinterlegt.

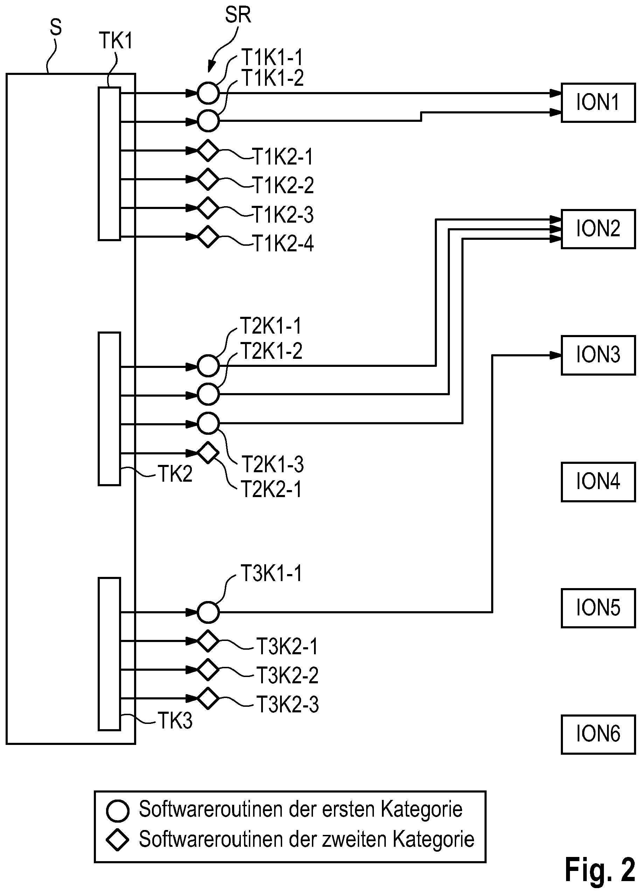

In der Abbildung der Figur 2 ist dargestellt, dass die Software S auf dem Prozessor P des Computersystems C beispielhaft drei Tasks TK1, TK2, TK3 umfasst, die Daten mit der Peripherie PER austauschen. In einem ersten Verfahrensschritt ST1 erstellen die Tasks TK1, ..., TK3 Softwareroutinen SR zur Programmierung zumindest einiger der Schnittstellenprozessoren ION1, ..., ION6 mit den Softwareroutinen SR, wobei jede Task TK1, ..., TK3 jede von der jeweiligen Task erstellte Softwareroutine entweder einer ersten Kategorie oder einer zweiten Kategorie zuordnet. Softwareroutinen der ersten Kategorie sind symbolisch als Kreise dargestellt und sind für tasksynchrone Datenübertragung vorgesehen. Softwareroutinen der zweiten Kategorie sind symbolisch als Rauten dargestellt und sind für kontinuierliche Datenübertragung vorgesehen.

Beispielhaft erstellt eine erste Task TK1 zwei Softwareroutinen T1K1-1, T1K1-2 der ersten Kategorie und vier Softwareroutinen T1K2-1, ..., T1K2-4 der zweiten Kategorie. Eine zweite Task TK2 erstellt drei Softwareroutinen T2K1-1, ..., T2K1-3 der ersten Kategorie und eine Softwareroutine T2K2-1 der zweiten Kategorie. Eine dritte Task TK3 erstellt eine Softwareroutine T3K1-1 der ersten Kategorie und drei Softwareroutinen T3K2-1, ..., T3K2-3 der zweiten Kategorie.

Die Softwareroutinen SR werden von den Tasks TK1, ..., TK3 in der Hochsprache C++ geschrieben, um es Anwendern zu ermöglichen, eigene Softwareroutinen für die Programmierung der Schnittstellenprozessoren ION1, ..., ION6 zu schreiben. Jede Softwareroutine umfasst zumindest einen memcpy32-Befehl, um ein Eingangsdatum aus einem Dateneingangsport IN1, ..., IN6 auszulesen und an einer durch den Prozessor P auslesbaren Speicheradresse zu hinterlegen oder um ein Ausgangsdatum aus einer durch den Prozessor P beschreibbaren Speicheradresse auszulesen und in einem Datenausgangsport OUT1, OUT2 zu hinterlegen. Jede Softwareroutine kann optional weitere Befehle umfassen, um Eingangsdaten bzw. Ausgangsdaten vor der Weiterleitung vor- bzw. nachzuverarbeiten, beispielsweise zu skalieren, mit einem Gleichanteil zu versehen, zu verrechnen oder durch logische Operationen zu verarbeiten. Weiterhin umfasst jede Softwareroutine eine Prüfung, ob an der auszulesenden Speicheradresse Daten hinterlegt sind, und die Befehle zur Auslesung der Daten sowie zu deren Vor- bzw. Nachverarbeitung werden nur ausgeführt, wenn das der Fall ist.

Jede der Softwareroutinen SR wird für die Schnittstellenprozessoren ION1, ..., ION6 kompiliert, d.h. in eine von den Schnittstellenprozessoren interpretierbare und ausführbare Sequenz von Maschinenbefehlen übersetzt. Die kompilierten Softwareroutinen werden auf die Schnittstellenprozessoren geladen. Softwareroutinen, die gemeinsam auf einen Schnittstellenprozessor geladen werden, werden wie in der EP 3 015 995 B1 beschrieben vor dem Ladevorgang jeweils zu einer kompakten Sequenz von Maschinenbefehlen zusammengefasst, die jede in die Sequenz eingegangene Softwareroutine als zusammenhängende Subsequenz umfasst, und die Schnittstellenprozessoren sind eingerichtet, die Sequenzen jeweils in ihrer Gesamtheit und ohne Unterbrechung abzuarbeiten.

Jeder Task TK1, ..., TK3 der Software S, die zum Austausch von Daten mit der Peripherie PER eingerichtet ist, wird zumindest ein Schnittstellenprozessor ION1, ..., ION6 eindeutig zugeordnet. Beispielhaft werden ein erster Schnittstellenprozessor ION1 der ersten Task TK1, ein zweiter Schnittstellenprozessor ION2 der zweiten Task TK2 und ein dritter Schnittstellenprozessor ION3 der dritten Task TK3 zugeordnet. Die Softwareroutinen der ersten Kategorie, die von einer bestimmten Task TK1, ..., TK3 erstellt wurden, werden ausschließlich auf die der jeweiligen Task zugeordneten Schnittstellenprozessoren geladen. Dementsprechend werden die von der ersten Task TK1 erstellten Softwareroutinen der ersten Kategorie T1K1-1, T1K1-2 auf den ersten Schnittstellenprozessor ION1 geladen, die von der zweiten Task TK2 erstellten Softwareroutinen der ersten Kategorie T2K1-1, ..., T2K1-3 auf den zweiten Schnittstellenprozessor ION2 geladen und die von der zweiten Task TK3 erstellte Softwareroutinen der ersten Kategorie T3K1-1 auf den dritten Schnittstellenprozessor ION3 geladen.

Jeder Schnittstellenprozessor ION1, ..., ION6, der einer Task TK1, ..., TK3 zugeordnet wird, wird der Task eindeutig zugeordnet, d.h. er wird ausschließlich mit Softwareroutinen programmiert, die von der Task, der er zugeordnet ist, erstellt wurden, die von dem Schnittstellenprozessor hinterlegten Eingangsdaten werden ausschließlich von der Task ausgelesen, der er zugeordnet ist, und die von ihm ausgelesenen Ausgangsdaten wurden ausschließlich von der Task hinterlegt, der er zugeordnet ist. In umgekehrter Richtung ist eine eindeutige Zuordnung nicht unbedingt vorgesehen. Bei Bedarf kann einer Task TK1, ..., TK3 mehr als ein Schnittstellenprozessor ION1, ..., ION6 zugeordnet werden.

Die beschriebene Verteilung der Softwareroutinen der ersten Kategorie entspricht der in der Patentschrift EP 3 015 995 B1 beschriebenen Vorgehensweise. Die in der genannten Patentschrift offenbarte Erfindung ergibt sich demnach als Spezialfall der vorliegend beschriebenen Erfindung für den Fall, dass keine Softwareroutine SR der zweiten Kategorie zugeordnet wird.

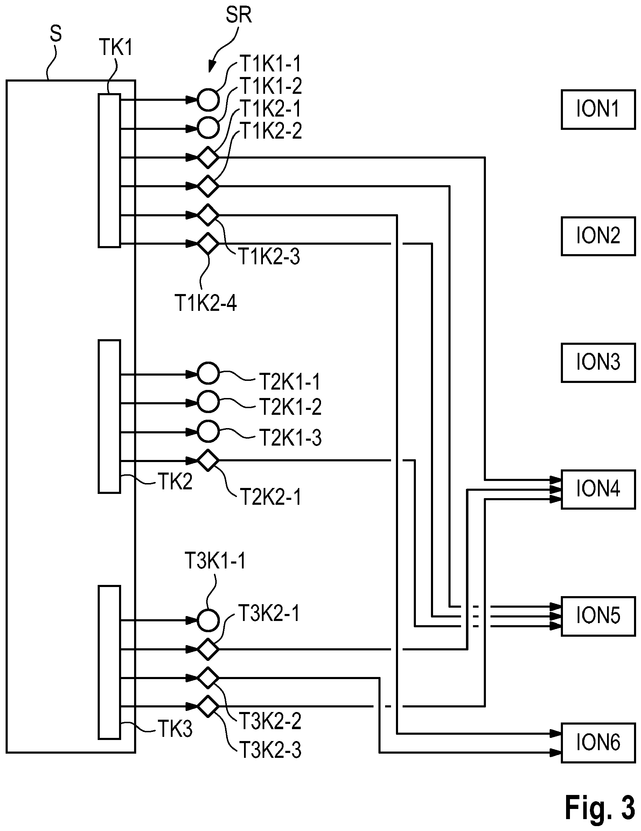

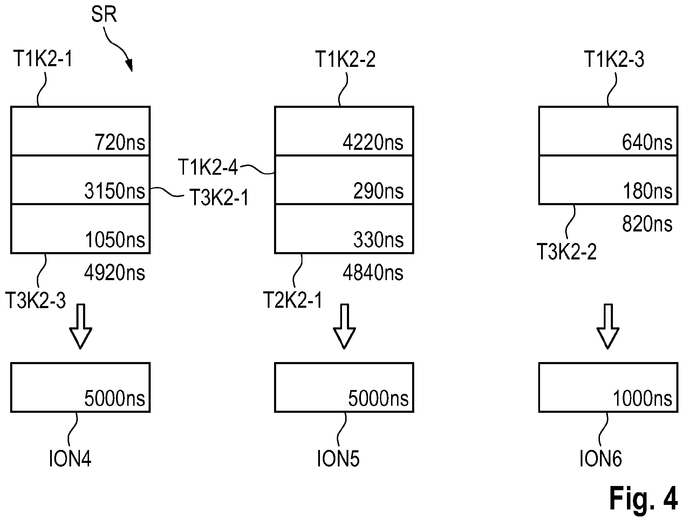

Die Verteilung der Softwareroutinen SR der zweiten Kategorie skizzieren die Abbildungen der Figuren 3 und 4. Wie in Figur 3 dargestellt, werden die Softwareroutinen SR der zweiten Kategorie auf die Schnittstellenprozessoren verteilt, die nach der Zuordnung von Schnittstellenprozessoren an die Tasks TK1, ..., TK3 keiner Task der Software S zugeordnet wurden, im dargestellten Fall also auf den vierten Schnittstellenprozessor ION4, den fünften Schnittstellenprozessor ION5 und den sechsten Schnittstellenprozessor ION6. Wie aus der Abbildung ersichtlich, erfolgt bei der Verteilung der Softwareroutinen SR der zweiten Kategorie keine besondere Zuordnung von Schnittstellenprozessoren ION1, ..., ION6 an Tasks TK1, ..., TK3 der Software S auf dem Prozessor P. Von unterschiedlichen Tasks TK1, ..., TK3 erstellte Softwareroutinen SR der zweiten Kategorie werden auf ein und denselben Schnittstellenprozessor ION4, ..., ION6 programmiert. Dementsprechend werden von einem mit Softwareroutinen SR der zweiten Kategorie programmierten Schnittstellenprozessor ION4, ..., ION6 hinterlegte Eingangsdaten im allgemeinen von unterschiedlichen Tasks TK1, ..., TK3 ausgelesen, und von einem mit Softwareroutinen SR der zweiten Kategorie programmierten Schnittstellenprozessor ION4, ..., ION6 ausgelesene Ausgangsdaten wurden im allgemeinen von unterschiedlichen Tasks TK1, ..., TK3 hinterlegt. Allerdings sind die einzelnen Softwareroutinen SR sowohl der ersten als auch der zweiten Kategorie jeweils eindeutig einer Task zugeordnet. Im konkreten Beispiel ist jede Softwareroutine SR eindeutig der Task TK1, ..., TK3 zugeordnet, die die Softwareroutine erstellt hat. Von einer bestimmten Softwareroutine SR der ersten oder der zweiten Kategorie hinterlegte Eingangsdaten werden nur von einer einzigen Task TK1, ..., TK3 ausgelesen, und von einer bestimmten Softwareroutine SR der ersten oder der zweiten Kategorie ausgelesene Ausgangsdaten wurden zuvor nur von einer einzigen Task TK1, ..., TK3 hinterlegt.

Softwareroutinen SR der zweiten Kategorie, die auf einen gemeinsamen Schnittstellenprozessor ION4, ..., ION6 geladen werden, werden vor dem Ladevorgang auf gleiche Weise wie die Softwareroutinen SR der ersten Kategorie in C++ erstellt, kompiliert und vor dem Ladevorgang zu kompakten Sequenzen von Maschinenbefehlen zusammengefasst.

Die Abbildung der Figur 4 skizziert die Kriterien, nach denen die Softwareroutinen SR der zweiten Kategorie auf die Schnittstellenprozessoren ION4, ..., ION6 verteilt werden. Die Softwareroutinen der zweiten Kategorie sind im oberen Bildteil als Rechtecke dargestellt. Für jede Softwareroutine SR der zweiten Kategorie wird eine maximale Abarbeitungszeit ermittelt, die jeweils in der rechten unteren Ecke der Rechtecke angegeben ist. Die Softwareroutinen sind so ausgestaltet, dass jeder Maschinenbefehl einer Softwareroutine maximal ein mal pro Zyklus eines Schnittstellenprozessors ION1, ..., ION6 von dem Schnittstellenprozessor ausgeführt wird, und die Schnittstellenprozessoren ION1, ..., ION6 werden eingerichtet, die auf sie geladenen kompakten Sequenzen pro Zyklus nur ein mal und ohne Unterbrechung abzuarbeiten. Demnach ergibt sich die maximale Abarbeitungszeit einer Softwareroutine aus der Anzahl der Maschinenbefehle in der Softwareroutine und der Taktung der Schnittstellenprozessoren ION1, ..., ION6.

Die für die Programmierung mit Softwareroutinen SR der zweiten Kategorie zur Verfügung stehenden Schnittstellenprozessoren, also der vierte Schnittstellenprozessor ION4, der fünfte Schnittstellenprozessor ION5 und der sechste Schnittstellenprozessor ION6, sind im unteren Bildteil als Rechtecke dargestellt. Für jeden dieser Schnittstellenprozessoren wird eine akzeptable Auslesezeit ermittelt, oder die akzeptable Auslesezeit ist als konstanter Wert fest vorgegeben. Dargestellt ist eine Ausführung, in der die maximale Auslesezeit für jeden Schnittstellenprozessor flexibel vorgebbar ist. Für den vierten Schnittstellenprozessor ION4 und den fünften Schnittstellenprozessor ION5 wurde jeweils eine akzeptable Auslesezeit von 5000ns (5000 Nanosekunden) ermittelt, für den sechsten Schnittstellenprozessor ION6 eine akzeptable Auslesezeit von 1000ns. Unter der akzeptablen Auslesezeit ist eine Zeitspanne zu verstehen, innerhalb derer die Auslesung, Vorverarbeitung und Hinterlegung der von dem Schnittstellenprozessor weitergeleiteten Eingangsdaten und Ausgangsdaten abgeschlossen sein muss. Gleichbedeutend kann unter der akzeptablen Auslesezeit eine maximale Zeitspanne verstanden werden, die die vollständige Abarbeitung der auf einen Schnittstellenprozessor programmierten Softwareroutinen innerhalb eines Zyklus maximal in Beschlag nehmen darf.

Die Verteilung der Softwareroutinen SR der zweiten Kategorie auf die für die Verteilung zur Verfügung stehenden Schnittstellenprozessoren ION4, ..., ION6 geschieht derart, dass auf jedem mit Softwareroutinen SR der zweiten Kategorie programmierten Schnittstellenprozessor ION4, ..., ION6 die maximale Abarbeitungszeit der Gesamtheit aller auf den Schnittstellenprozessor ION4, ..., ION6 programmierten Softwareroutinen SR kleiner als die akzeptable Auslesezeit ist. Die maximale Abarbeitungszeit der auf den vierten Schnittstellenprozessor ION4 programmierten Softwareroutinen T1K2-1, T3K2-1, T3K2-3 beträgt in Summe 4920ns, die maximale Abarbeitungszeit der auf den fünften Schnittstellenprozessor ION5 programmierten Softwareroutinen T1K2-2, T1K2-4, T2K2-1 beträgt in Summe 4840ns, und die maximale Abarbeitungszeit der auf den sechsten Schnittstellenprozessor ION6 programmierten Softwareroutinen T1K2-3, T3K2-2 beträgt in Summe 820ns. Demnach ist für jeden mit Softwareroutinen SR der zweiten Kategorie programmierten Schnittstellenprozessor ION4, ..., ION6 sichergestellt, dass der Schnittstellenprozessor die Abarbeitung der auf ihn programmierten Softwareroutinen innerhalb der akzeptablen Auslesezeit abschließt.

Die akzeptable Auslesezeit eines Schnittstellenprozessors ION1, ..., ION6 muss so gewählt sein, dass während der Abarbeitung der Software S die vollständige Abarbeitung der auf den Schnittstellenprozessor programmierten Softwareroutinen SR der zweiten Kategorie sichergestellt ist. Die maximale Abarbeitungszeit darf demnach nicht höher sein als die Zyklusrate des jeweiligen Schnittstellenprozessors. Vorteilhaft ist, für die maximale Abarbeitungszeit noch eine zeitliche Ungenauigkeit mit einzuplanen, d.h. bei der Festlegung der maximalen Abarbeitungszeit einen gewissen Abstand zu der akzeptablen Auslesezeit einzuhalten. Die zeitliche Ungenauigkeit kann beispielsweise einem Jitter des Schnittstellenprozessors entsprechen.

Die akzeptable Auslesezeit ist beispielsweise mittels einer Konfigurationssoftware vor Beginn der Abarbeitung der Software S festlegbar und sollte für jeden Schnittstellenprozessor ION1, ..., ION6 so gewählt werden, dass der jeweilige Schnittstellenprozessor die in den Dateneingangsports IN1, ..., IN6 hinterlegten Eingangsdaten, die der jeweilige Schnittstellenprozessor aufgrund seiner Programmierung ausliest, vollständig überträgt. Die Zyklusrate eines mit Softwareroutinen SR der zweiten Kategorie programmierten Schnittstellenprozessor ION1, ..., ION6 wird demnach vorteilhaft mit einer Datenhinterlegungsrate synchronisiert, mit der Eingangsdaten in einem Dateneingangsport hinterlegt werden, aus dem der zweite Schnittstellenprozessor aufgrund seiner Programmierung Eingangsdaten ausliest. Darunter ist nicht zwingend zu verstehen, dass die Zyklusrate des Schnittstellenprozessors gleich der Datenhinterlegungsrate der Eingangsdaten gewählt ist. Wenn der Schnittstellenprozessor die Eingangsdaten beispielsweise als Paket überträgt, ist ein Bruchteil der Datenhinterlegungsrate als Zyklusrate für den Schnittstellenprozessor ausreichend.

In einer einfacheren Ausführungsform ist die akzeptable Auslesezeit nicht flexibel festlegbar, sondern fest vorgegeben und kann sich beispielsweise an einer maximalen Datenhinterlegungsrate orientieren, mit der Eingangsdaten in einem Dateneingangsport IN1, ..., IN6 hinterlegbar sind. Grundsätzlich kann die Verteilung der Softwareroutinen SR der zweiten Kategorie automatisch oder von Hand erfolgen. Bei der Verteilung von Hand könnte beispielsweise die Abbildung der Figur 4 ein Vorbild für eine graphische Bedienoberfläche sein, mittels derer Softwareroutinen SR der zweiten Kategorie den Schnittstellenprozessoren ION1, ..., ION6, die keiner Task TK1, ..., TK3 zugeordnet sind, zuweisbar sind und die dem Anwender für jeden dieser Schnittstellenprozessoren Rückmeldung gibt, ob die maximale Abarbeitungszeit kleiner als die akzeptable Auslesezeit ist.

Die kompilierten und zu kompakten Sequenzen zusammengefassten Softwareroutinen SR werden auf die Schnittstellenprozessoren ION1, ..., ION6 geladen, und nach Abschluss des Ladevorgangs werden die Abarbeitung der Software S und zeitgleich die Abarbeitung der Softwareroutinen SR durch die Schnittstellenprozessoren ION1, ..., ION6 gestartet. Jeder Schnittstellenprozessor ist ausschließlich mit Softwareroutinen SR der ersten Kategorie oder ausschließlich mit Softwareroutinen SR der zweiten Kategorie oder mit keiner Softwareroutine SR programmiert.

Die Zyklusrate jedes mit Softwareroutinen SR der ersten Kategorie programmierten Schnittstellenprozessors ION1, ..., ION3 ist gleich der Zyklusrate oder gleich einem Bruchteil der Zyklusrate der jeweiligen Task TK1, ..., TK3 gewählt, der der Schnittstellenprozessor zugeordnet ist, sodass die Task in jedem Zyklus oder nach einer festgelegten Anzahl von Zyklen neue Eingangsdaten vorfindet. Diese Art der Datenübertragung ist sinnvoll für die Abtastung von Signalen, zu deren Abtastung die Zyklusrate der Task ausreichend ist. Ist das Computersystem C beispielsweise ein RCP-System, dass durch die Software S eingerichtet ist, die Funktion eines Motorsteuergeräts zu übernehmen, dann können beispielsweise die Eingangsdaten für die Überwachung der Motortemperatur, der Stellung des Gaspedals oder des Kurbelwellenwinkels durch Softwareroutinen der ersten Kategorie hinterlegt werden.

Die Zyklusrate jedes mit Softwareroutinen SR der zweiten Kategorie programmierten Schnittstellenprozessors ION4, ..., ION6 wird unabhängig von den Zyklusraten der Tasks TK1, ..., TK3 gewählt. Diese Schnittstellenprozessoren übertragen Eingangsdaten kontinuierlich statt tasksynchron. Diese Art der Datenübertragung ist sinnvoll für die Abtastung von Signalen, zu deren Abtastung die Zyklusrate der die Eingangsdaten auslesenden Tasks nicht ausreichend ist. Für das beispielhaft genannte RCP-System könnten Beispielsweise Eingangssignale zur Überwachung der Zylinderinnendrücke oder der Strangströme eines Elektromotors von Softwareroutinen der zweiten Kategorie hinterlegt werden.

## Patentansprüche

1. Verfahren zur Verwaltung von Eingangsdaten eines Computersystems (C) mittels einer Schnittstelleneinheit (IO), die zumindest einen ersten Schnittstellenprozessor (ION1) und einen zweiten Schnittstellenprozessor (ION4) umfasst, wobei jeder Schnittstellenprozessor (ION1, ..., ION6) der Schnittstelleneinheit (IO) programmierbar und durch Programmierung einrichtbar ist, um ein von einer Peripherie (PER) des Computersystems in einem Dateneingangsport (IN1, ..., IN6) der Schnittstelleneinheit (IO) hinterlegtes Eingangsdatum auszulesen und an einer durch einen Prozessor (P) des Computersystems (C) auslesbaren Speicheradresse zu hinterlegen,
oder um ein von der Peripherie (PER) in einem Dateneingangsport (IN1, ..., IN6) der Schnittstelleneinheit (IO) hinterlegtes Eingangsdatum auszulesen, das Eingangsdatum vorzuverarbeiten und an einer durch den Prozessor (P) des Computersystems (C) auslesbaren Speicheradresse zu hinterlegen,
wobei zwischen der Peripherie (PER) und einer Anzahl von Dateneingangsports (IN1, ..., IN6) der Schnittstelleneinheit (IO) eine erste Datenverbindung (DL1) eingerichtet wird und die Peripherie (PER) eingerichtet wird, um mittels der ersten Datenverbindung (DL1) Eingangsdaten in zumindest einem Dateneingangsport (IN1, ..., IN6) aus der Anzahl von Dateneingangsports (IN1, ..., IN6) zu hinterlegen;
zwischen der Schnittstelleneinheit (IO) und dem Prozessor (P) des Computersystems (C) eine zweite Datenverbindung (DL2) für die Hinterlegung von Eingangsdaten an einer durch den Prozessor (P) des Computersystems (C) auslesbaren Speicheradresse durch die Schnittstelleneinheit (IO) eingerichtet wird;
auf den Prozessor (P) des Computersystems (C) eine Software (S) programmiert wird, die zumindest eine zur Verarbeitung von durch die Schnittstelleneinheit (IO) weitergeleiteten Eingangsdaten eingerichtete erste Task (TK1) umfasst;
eine mindestens zwei Softwareroutinen umfassende Anzahl von Softwareroutinen (SR) erstellt wird, wobei jede Softwareroutine (SR) eingerichtet ist, um einen Schnittstellenprozessor (ION1, ..., ION6) für das Auslesen eines Eingangsdatums aus einem Dateneingangsport (IN1, ..., IN6) der Schnittstelleneinheit (IO) und für die Hinterlegung des Eingangsdatums an einer durch den Prozessor (P) des Computersystems (C) auslesbaren Speicheradresse zu programmieren
oder um einen Schnittstellenprozessor (ION1, ..., IO6) für das Auslesen eines Eingangsdatums aus einem Dateneingangsport (IN1, ..., IN6) der Schnittstelleneinheit (IO), für die Vorverarbeitung des Eingangsdatums und für die Hinterlegung des Eingangsdatums an einer durch den Prozessor (P) des Computersystems (C) auslesbaren Speicheradresse zu programmieren;
**dadurch gekennzeichnet, dass** eine erste Untermenge (T1K1-1, T1K1-2) der Anzahl von Softwareroutinen (SR) einer für tasksynchrone Datenübertragung vorgesehenen ersten Kategorie zugeordnet wird und der erste Schnittstellenprozessor (ION1) mit der ersten Untermenge (T1K1-1, T1K1-2) programmiert wird,
wobei unter tasksynchroner Datenübertragung zu verstehen ist, dass die Abarbeitung der Softwareroutinen auf einem Schnittstellenprozessor (ION1, ..., ION6) mit der Task (TK1, ..., TK3) synchronisiert ist, für die die auf den jeweiligen Schnittstellenprozessor (ION1, ..., ION6) programmierten Softwareroutinen erstellt wurden und der die Softwareroutinen Eingangsdaten zuarbeiten;
eine zweite Untermenge (T1K2-2) der Anzahl von Softwareroutinen (SR) einer für kontinuierliche Datenübertragung vorgesehenen zweiten Kategorie zugeordnet wird und der zweite Schnittstellenprozessor (ION4) mit der zweiten Untermenge programmiert wird,
wobei unter kontinuierlicher Datenübertragung zu verstehen ist, dass ein Schnittstellenprozessor (ION1, ..., ION6) in einem Dateneingangsport (IN1, ..., IN6) hinterlegte Eingangsdaten ohne Berücksichtigung der Zyklusrate einer auf dem Prozessor (P) ausgeführten Task (TK1, ..., TK3) an den Prozessor (P) weiterleitet;
die Abarbeitung der Software (S) durch den Prozessor (P) des Computersystems (C) gestartet wird;
während der Abarbeitung der Software (S) durch den Prozessor (P) des Computersystems (C) die Softwareroutinen (SR) zyklisch durch die Schnittstellenprozessoren (ION1, ..., IO6) abgearbeitet werden,
wobei der erste Schnittstellenprozessor (ION1) eingerichtet wird, die erste Untermenge (T1K1-1, T1K1-2) mit einer ersten Zyklusrate abzuarbeiten und der zweite Schnittstellenprozessor (ION4) eingerichtet wird, die zweite Untermenge (T1K2-1) mit einer zweiten Zyklusrate abzuarbeiten
und die erste Task (TK1) eingerichtet ist, um während der Abarbeitung der Software (S) durch den Prozessor (P) des Computersystems (C) die von der ersten Untermenge (T1K1-1, T1K1-2) und von der zweiten Untermenge (T1K2-1) hinterlegten Eingangsdaten auszulesen und zu verarbeiten.

2. Verfahren nach Anspruch 1, wobei die erste Zyklusrate synchron zur Zyklusrate der ersten Task (TK1) gewählt wird und die zweite Zyklusrate synchron zu einer Datenhinterlegungsrate gewählt wird, mit der Eingangsdaten in einem Dateneingangsport (IN1, ..., IN6), aus dem der zweite Schnittstellenprozessor (ION4) aufgrund seiner Programmierung Eingangsdaten ausliest, hinterlegt werden.

3. Verfahren nach Anspruch 1 oder 2, wobei der erste Schnittstellenprozessor (ION1) eingerichtet wird, die erste Untermenge (T1K1-1, T1K1-2) in jedem Zyklus in ihrer Gesamtheit und ohne Unterbrechung abzuarbeiten
und der zweite Schnittstellenprozessor (ION4) eingerichtet wird, die zweite Untermenge (T1K2-1) in jedem Zyklus in ihrer Gesamtheit und ohne Unterbrechung abzuarbeiten,
insbesondere, wobei die erste Untermenge (T1K1-1, T1K1-2) und die zweite Untermenge (T1K1-2) jeweils zu einer kompakten Sequenz von Maschinenbefehlen zusammengefasst werden
und der erste Schnittstellenprozessor (ION1) und der zweite Schnittstellenprozessor (ION4) eingerichtet werden, die jeweilige Sequenz in jedem Zyklus vollständig abzuarbeiten und jeden in der Sequenz enthaltenen Maschinenbefehl nur ein mal pro Zyklus auszuführen.

4. Verfahren nach einem der vorhergehenden Ansprüche, wobei zumindest der erste Schnittstellenprozessor (ION1) der ersten Task (TK1) zugeordnet wird;
die der ersten Task (TK1) zugeordneten Schnittstellenprozessoren (ION1) mit Softwareroutinen (SR) der ersten Kategorie programmiert werden;
die von den der ersten Task (TK1) zugeordneten Schnittstellenprozessoren hinterlegten Eingangsdaten ausschließlich von der ersten Task (TK1) ausgelesen werden;
die Software (S) eine zweite Task (TK2) umfasst und zumindest ein Schnittstellenprozessor (ION2) der zweiten Task (TK2) zugeordnet wird;
die der zweiten Task (TK2) zugeordneten Schnittstellenprozessoren (ION2) mit Softwareroutinen (SR) der ersten Kategorie programmiert werden;
die von den der zweiten Task (TK2) zugeordneten Schnittstellenprozessoren (ION2) hinterlegten Eingangsdaten ausschließlich von der zweiten Task (TK2) eingelesen werden; und
die Softwareroutinen der zweiten Kategorie auf Schnittstellenprozessoren (ION4, ..., ION6) verteilt und programmiert werden, die keiner Task (T1, ..., TK3) zugeordnet sind.

5. Verfahren nach Anspruch 4, wobei die einer Task (TK1, ..., TK3) zugeordneten Schnittstellenprozessoren (ION1, ..., ION3) ausschließlich mit Softwareroutinen (SR) der ersten Kategorie programmiert werden
und die keiner Task (TK1, ..., TK3) zugeordneten Schnittstellenprozessoren (ION4, ..., ION6) ausschließlich mit Softwareroutinen (SR) der zweiten Kategorie programmiert werden oder mit keiner Softwareroutine (SR) programmiert werden.

6. Verfahren nach Anspruch 4 oder 5, wobei die Softwareroutinen (SR) für die Programmierung von Schnittstellenprozessoren (ION1, ..., ION6) zur Hinterlegung der Eingangsdaten, zu deren Auslesung die erste Task (TK1) eingerichtet ist, von der ersten Task erstellt werden
und die erste Task (TK1) jede von der ersten Task (TK1) erstellte Softwareroutine (T1K1-1, T1K1-2, T1K2-1, ..., T1K2-4) der ersten Kategorie oder der zweiten Kategorie zuordnet,
und die Softwareroutinen (SR) für die Programmierung von Schnittstellenprozessoren (ION1, ..., ION6) zur Hinterlegung der Eingangsdaten, zu deren Auslesung die zweite Task (TK2) eingerichtet ist, von der zweiten Task (TK2) erstellt werden
und die zweite Task (TK2) jede von der zweiten Task (TK2) erstellte Softwareroutine (T2K1-1, ..., T2K1-3, T2K2-1) der ersten Kategorie oder der zweiten Kategorie zuordnet.

7. Verfahren nach einem der Ansprüche 4 bis 6, wobei die Softwareroutinen (SR) der zweiten Kategorie manuell auf die Schnittstellenprozessoren (ION1, ..., ION6) verteilt werden.

8. Verfahren nach einem der Ansprüche 4 bis 6, wobei die Softwareroutinen (SR) der zweiten Kategorie derart auf die Schnittstellenprozessoren (ION1, ..., ION6) verteilt werden, dass für jeden mit Softwareroutinen (SR) der zweiten Kategorie programmierten Schnittstellenprozessor (ION4, ..., ION6) die maximale Abarbeitungszeit der Gesamtheit aller auf den Schnittstellenprozessor programmierten Softwareroutinen (SR) der zweiten Kategorie kleiner als eine vor Beginn der Abarbeitung der Softwareroutinen (SR) festgelegte akzeptable Auslesezeit ist.

9. Verfahren nach Anspruch 8, wobei die Softwareroutinen (SR) der zweiten Kategorie derart auf die Schnittstellenprozessoren (ION1, ..., ION6) verteilt werden, dass die maximale Abarbeitungszeit jedes mit Softwareroutinen der zweiten Kategorie programmierten Schnittstellenprozessors (ION4, ..., ION6) kleiner als die für den Schnittstellenprozessor ermittelte akzeptable Auslesezeit abzüglich einer zeitlichen Ungenauigkeit ist.

10. Verfahren nach Anspruch 8 oder 9, wobei die akzeptable Auslesezeit für alle Schnittstellenprozessoren (ION1, ..., ION6) identisch vorgegeben ist und die Softwareroutinen (SR) der zweiten Kategorie, insbesondere automatisch anhand einer Software-Verteilungsroutine, derart auf die Schnittstellenprozessoren (ION1, ..., ION6) verteilt werden, dass von den Schnittstellenprozessoren (ION4, ..., ION6), die mit Softwareroutinen (SR) der zweiten Kategorie programmiert sind, die Differenz zwischen der maximalen Abarbeitungszeit des Schnittstellenprozessors mit der größten maximalen Abarbeitungszeit und des Schnittstellenprozessors mit der kleinsten maximalen Abarbeitungszeit minimal ist.

11. Verfahren nach Anspruch 8 oder 9, wobei für jeden Dateneingangsport (IN1, ..., IN6) der Schnittstelleneinheit (IO) eine individuelle akzeptable Auslesezeit festgelegt wird, insbesondere anhand einer Konfigurationssoftware festgelegt wird,
die Softwareroutinen (SR) der zweiten Kategorie von einem Anwender manuell auf die Schnittstellenprozessoren (ION1, ..., ION6) verteilt werden
und für jeden mit Softwareroutinen (SR) der zweiten Kategorie programmierten Schnittstellenprozessor (ION4, ..., ION6) überprüft wird, ob die maximale Abarbeitungszeit des jeweiligen Schnittstellenprozessors (ION4, ..., ION6) kleiner als die akzeptable Auslesezeit aller Dateneingangsports (IN1, ..., IN6) ist, aus denen der Schnittstellenprozessor (ION4, ..., ION6) aufgrund seiner Programmierung Eingangsdaten ausliest.

12. Computersystem (C) mit einem Prozessor (P) und einer Schnittstelleneinheit (IO), die zumindest einen ersten Schnittstellenprozessor (ION1) und einen zweiten Schnittstellenprozessor (ION4) umfasst, wobei jeder Schnittstellenprozessor (ION1, ..., ION6) der Schnittstelleneinheit (IO) programmierbar und durch Programmierung einrichtbar ist, um ein von einer Peripherie (PER) des Computersystems (C) mittels einer ersten Datenverbindung (DL1) in einem Dateneingangsport (IN1, ..., IN6) der Schnittstelleneinheit (IO) hinterlegtes Eingangsdatum auszulesen und an einer durch den Prozessor (P) des Computersystems (C) auslesbaren Speicheradresse zu hinterlegen,
oder um ein von der Peripherie (PER) mittels der ersten Datenverbindung (DL1) in einem Dateneingangsport (IN1, ..., IN6) der Schnittstelleneinheit hinterlegtes Eingangsdatum auszulesen, das Eingangsdatum vorzuverarbeiten und an einer durch den Prozessor des Computersystems auslesbaren Speicheradresse zu hinterlegen;
zwischen der Schnittstelleneinheit (IO) und dem Prozessor (P) des Computersystems (C) eine zweite Datenverbindung (DL2) für die Hinterlegung von Eingangsdaten an einer durch den Prozessor (P) des Computersystems (C) auslesbaren Speicheradresse durch die Schnittstelleneinheit (IO) eingerichtet ist;
auf dem Prozessor (P) des Computersystems (C) eine Software (S) hinterlegt ist, die zumindest eine zur Verarbeitung von durch die Schnittstelleneinheit (IO) weitergeleiteten Eingangsdaten eingerichtete erste Task (TK1) umfasst;
das Computersystem (C) eingerichtet ist, um eine Anzahl von zwei oder mehr Softwareroutinen (SR) zu erstellen und jede Softwareroutine (SR) einzurichten, um einen Schnittstellenprozessor (ION1, ..., ION6) für das Auslesen eines Eingangsdatums aus einem Dateneingangsport (IN1, ..., IN6) der Schnittstelleneinheit (IO) und für die Hinterlegung des Eingangsdatums an einer durch den Prozessor (P) des Computersystems (C) auslesbaren Speicheradresse zu programmieren
oder um einen Schnittstellenprozessor (ION1, ..., ION6) für das Auslesen eines Eingangsdatums aus einem Dateneingangsport (IN1, ..., IN6) der Schnittstelleneinheit (IO), für die Vorverarbeitung des Eingangsdatums und für die Hinterlegung des Eingangsdatums an einer durch den Prozessor (P) des Computersystems (C) auslesbaren Speicheradresse zu programmieren;
**dadurch gekennzeichnet, dass** das Computersystem (C) eingerichtet ist, eine erste Untermenge (T1K1-1, T1K1-2) der Anzahl von Softwareroutinen (SR) einer für tasksynchrone Datenübertragung vorgesehenen ersten Kategorie zuzuordnen und den ersten Schnittstellenprozessor (ION1) mit der ersten Untermenge (T1K1-1, T1K1-2) zu programmieren,
wobei unter tasksynchroner Datenübertragung zu verstehen ist, dass die Abarbeitung der Softwareroutinen auf einem Schnittstellenprozessor (ION1, ..., ION6) mit der Task (TK1, ..., TK3) synchronisiert ist, für die die auf den jeweiligen Schnittstellenprozessor (ION1, ..., ION6) programmierten Softwareroutinen erstellt wurden und der die Softwareroutinen Eingangsdaten zuarbeiten;
eine zweite Untermenge (T1K2-1) der Anzahl von Softwareroutinen (SR) einer für kontinuierliche Datenübertragung vorgesehenen zweiten Kategorie zuzuordnen und den zweiten Schnittstellenprozessor (ION4) mit der zweiten Untermenge (T1K2-1) zu programmieren,
wobei unter kontinuierlicher Datenübertragung zu verstehen ist, dass ein Schnittstellenprozessor (ION1, ..., ION6) in einem Dateneingangsport (IN1, ..., IN6) hinterlegte Eingangsdaten ohne Berücksichtigung der Zyklusrate einer auf dem Prozessor (P) ausgeführten Task (TK1, ..., TK3) an den Prozessor (P) weiterleitet;
die Software (S) mittels des Prozessors (P) des Computersystems (C) abzuarbeiten, während der Abarbeitung der Software (S) die Softwareroutinen (SR) mittels der Schnittstellenprozessoren (ION1, ..., ION6) zyklisch abzuarbeiten
und dabei die erste Untermenge (T1K1-1, T1K1-2) auf dem ersten Schnittstellenprozessor (ION1) mit einer ersten Zyklusrate abzuarbeiten und die zweite Untermenge (T1K2-1) auf dem zweiten Schnittstellenprozessor (ION4) mit einer zweiten Zyklusrate abzuarbeiten;
und die erste Task (TK1) einzurichten, während der Abarbeitung der Software (S) die von der ersten Untermenge (T1K1-1, T1K1-2) und von der zweiten Untermenge (T1K2-1) hinterlegten Eingangsdaten auszulesen und zu verarbeiten.

13. Computersystem (C) nach Anspruch 12, das zur Durchführung eines Verfahrens nach einem der Ansprüche 2 bis 11 eingerichtet ist.

## Claims

1. A method for managing input data of a computer system (C) by means of an interface unit (10) comprising at least one first interface processor (ION1) and one second interface processor (ION4), each interface processor (ION1, ..., ION6) of the interface unit (10) being programmable and configurable by programming for reading an input datum placed in a data input port (IN1, ..., IN6) of the interface unit (10) by a peripheral system (PER) of the computer system, and for placing the input datum at a memory address readable by a processor (P) of the computer system (C),
or for reading an input datum placed in a data input port (IN1, ..., IN6) of the interface unit (10) by the peripheral system (PER), for preprocessing the input datum, and for placing the preprocessed input datum at a memory address readable by the processor (P) of the computer system (C),
a first data connection (DL1) being established between the peripheral system (PER) and a number of data input ports (IN1, ..., IN6) of the interface unit (10), and the peripheral system (PER) being configured for placing input data in at least one data input port (IN1, ..., IN6) of the number of data input ports (IN1, ..., IN6) by means of the first data connection (DL1);
a second data connection (DL2) being established by the interface unit (10) between the interface unit (10) and the processor (P) of the computer system (C) for placing input data at a memory address readable by the processor (P) of the computer system (C);
a software program (S) being programmed on the processor (P) of the computer system (C) and comprising at least one first task (TK1) configured for processing input data forwarded by the interface unit (10);
a plurality of software routines (SR) comprising at least two software routines being generated, each software routine (SR) being configured for programming an interface processor (ION1, ..., ION6) for reading an input datum from a data input port (IN1, ..., IN6) of the interface unit (10) and for placing the input datum at a memory address readable by the processor (P) of the computer system (C),
or an interface processor (ION1, ..., 106) being programmed for reading an input datum from a data input port (IN1, ..., IN6) of the interface unit (10), for preprocessing the input datum, and for placing the input datum at a memory address readable by the processor (P) of the computer system (C);
**characterized in that** a first subset (T1K1-1, T1K1-2) of the plurality of software routines (SR) is associated with a first category provided for task-synchronous data transfer and the first interface processor (ION1) is programmed using the first subset (T1K1-1, T1K1-2),
wherein task-synchronous data transfer is understood to mean that the executing of the software routines on an interface processor (ION1, ..., ION6) is synchronized to the task (TK1, ..., TK3) for which the software routines programmed at each interface processor (ION1, ..., ION6) were created and for which the software routines prepare input data;
a second subset (T1K2-2) of the plurality of software routines (SR) is associated with a second category provided for continuous data transfer, and the second interface processor (ION4) is programmed using the second subset,
wherein continuous data transfer is understood to mean that an interface processor (ION1, ..., ION6) forwards to the processor (P) input data placed in a data input port (IN1, ..., IN6) without considering the cycle rate of a task (TK1, ..., TK3) executed on the processor (P);
the executing of the software (S) by the processor (P) of the computer system (C) is started;
the software routines (SR) are executed cyclically by the interface processors (ION1, ..., 106) during the executing of the software (S) by the processor (P) of the computer system (C),
wherein the first interface processor (ION1) is configured for executing the first subset (T1K1-1, T1K1-2) at a first cycle rate and the second interface processor (ION4) is established for executing the second subset (T1K2-1) at a second cycle rate,
and the first task (TK1) is configured for reading and processing the input data placed by the first subset (T1K1-1, T1K1-2) and by the second subset (T1K2-1) during the executing of the software (S) by the processor (P) of the computer system (C).

2. The method according to claim 1, wherein the first cycle rate is selected to be synchronous to the cycle rate of the first task (TK1) and the second cycle rate is selected to be synchronous to a data placing rate at which input data is placed in a data input port (IN1, ..., IN6) from which the second interface processor (ION4) reads input data due to the programming thereof.

3. The method according to claim 1 or 2, wherein the first interface processor (ION1) is configured for executing the first subset (T1K1-1, T1K1-2) in full and without interruption in every cycle,
and the second interface processor (ION4) is configured for executing the second subset (T1K2-1) in full and without interruption in every cycle,
particularly wherein the first subset (T1K1-1, T1K1-2) and the second subset (T1K1-2) are each condensed into a compact sequence of machine commands
and the first interface processor (ION1) and the second interface processor (ION4) are configured for executing each sequence in full in every cycle and for executing each machine command present in the sequence only once per cycle.

4. The method according to any one of the preceding claims, wherein at least the first interface processor (ION1) is associated with the first task (TK1);
the interface processors (ION1) associated with the first task (TK1) are programmed using software routines (SR) of the first category;
the input data placed by the interface processors associated with the first task (TK1) is read exclusively by the first task (TK1);
the software (S) comprises a second task (TK2) and at least one interface processor (ION2) is associated with the second task (TK2);
the interface processors (ION2) associated with the second task (TK2) are programmed using software routines (SR) of the first category;
the input data placed by the interface processors (ION2) associated with the second task (TK2) is read exclusively by the second task (TK2); and
the software routines of the second category are distributed across and programmed on interface processors (ION4, ..., ION6) not associated with any task (T1, ..., TK3) .

5. The method according to claim 4, wherein the interface processors (ION1, ..., ION3) associated with a task (TK1, ..., TK3) are programmed exclusively using software routines (SR) of the first category
and the interface processors (ION4, ..., ION6) associated with no task (TK1, ..., TK3) are programmed exclusively using software routines (SR) of the second category or are not programmed using a software routine (SR) .

6. The method according to claim 4 or 5, wherein the software routines (SR) for programming interface processors (ION1, ..., ION6) for placing the input data, for the reading of which the first task (TK1) is configured, are created by the first task,
and the first task (TK1) associates each software routine (T1K1-1, T1K1-2, T1K2-1, ..., T1K2-4) created by the first task (TK1) with the first category or the second category,
and the software routines (SR) for programming interface processors (ION1, ..., ION6) for placing the input data, for the reading of which the second task (TK2) is configured, are created by the second task (TK2),
and the second task (TK2) associates each of the software routines (T2K1-1, ..., T2K1-3, T2K2-1) created by the second task (TK2) with the first category or the second category.

7. The method according to any one of the claims 4 through 6, wherein the software routines (SR) of the second category are manually distributed across the interface processors (ION1, ..., ION6).

8. The method according to any one of the claims 4 through 6, wherein the software routines (SR) of the second category are distributed across the interface processors (ION1, ..., ION6) such that the maximum executing time for the entirety of all software routines (SR) of the second category programmed on the interface processor is less than an acceptable reading time defined prior to starting the executing of the software routines (SR) for each interface processor (ION4, ..., ION6) programmed using software routines (SR) of the second category.

9. The method according to claim 8, wherein the software routines (SR) of the second category are distributed across the interface processors (ION1, ..., ION6) such that the maximum executing time of each interface processor (ION4, ..., ION6) programmed using software routines of the second category is less than the acceptable reading time determined for the interface processor, less an inaccuracy in the time.

10. The method according to claim 8 or 9, wherein the acceptable reading time is specified identically for all interface processors (ION1, ..., ION6) and the software routines (SR) of the second category are distributed particularly automatically across the interface processors (ION1, ..., ION6) using a software distributing routine, such that of the interface processors (ION4, ..., ION6) programmed using software routines (SR) of the second category , the difference between the maximum execution time of the interface processor having the greatest maximum execution time and of the interface processor having the least maximum execution time is minimal.

11. The method according to claim 8 or 9, wherein an individual acceptable reading time is defined for each data input port (IN1, ..., IN6) of the interface unit (10), particularly using a configuration software,
the software routines (SR) of the second category are manually distributed across the interface processors (ION1, ..., ION6) by a user,
and for each interface processor (ION4, ..., ION6) programmed using software routines (SR) of the second category, it is verified whether the maximum execution time of the particular interface processor (ION4, ..., ION6) is less than the acceptable reading time for all data input ports (IN1, ..., IN6) from which the interface processor (ION4, ..., ION6) reads input data due to the programming thereof.

12. A computer system (C) having a processor (P) and an interface unit (10), the interface unit comprising at least one first interface processor (ION1) and one second interface processor (ION4), each interface processor (ION1, ..., ION6) of the interface unit (10) being programmable and configurable by programming for reading an input datum placed by a peripheral system (PER) of the computer system (C) in a data input port (IN1, ..., IN6) of the interface unit (10) by means of a first data connection (DL1), and for placing the same at a memory address readable by the processor (P) of the computer system (C),
or for reading an input datum placed in a data input port (IN1, ..., IN6) of the interface unit by the peripheral system (PER) by means of the first data connection (DL1), for preprocessing the input datum, and for placing the preprocessed input datum at a memory address readable by the processor of the computer system,
a second data connection (DL2) being established 10) between the interface unit (10) and the processor (P) of the computer system (C) for placing input data at a memory address readable by the processor (P) of the computer system (C);
a software program (S) being placed on the processor (P) of the computer system (C) and comprising at least one first task (TK1) configured for processing input data forwarded by the interface unit (10);
the computer system (C) being configured for creating a plurality of two or more software routines (SR) and for configuring each software routine (SR)for programming an interface processor (ION1, ..., ION6) to read an input datum from a data input port (IN1, ..., IN6) of the interface unit (10) and place the input datum at a memory address readable by the processor (P) of the computer system (C), or for programming an interface processor (ION1, ..., ION6) to read an input datum from a data input port (IN1, ..., IN6) of the interface unit (10), preprocess the input datum, and place the input datum at a memory address readable by the processor (P) of the computer system (C);
**characterized in that** the computer system (C) is configured for associating a first subset (T1K1-1, T1K1-2) of the plurality of software routines (SR) with a first category provided for task-synchronous data transfer, and for programming the first interface processor (ION1) using the first subset (T1K1-1, T1K1-2),
wherein task-synchronous data transfer is understood to mean that the executing of the software routines on an interface processor (ION1, ..., ION6) is synchronized to the task (TK1, ..., TK3) for which the software routines programmed at each interface processor (ION1, ..., ION6) were created and for which the software routines prepare input data;
for associating a second subset (T1K2-1) of the plurality of software routines (SR) with a second category provided for continuous data transfer and for programming the second interface processor (ION4) using the second subset (T1K2-1),
wherein continuous data transfer is understood to mean that an interface processor (ION1, ..., ION6) forwards to the processor (P) input data placed in a data input port (IN1, ..., IN6) without considering the cycle rate of a task (TK1, ..., TK3) executed on the processor (P);
for executing the software (S) by means of the processor (P) of the computer system (C), for cyclically executing the software routines (SR) by means of the interface processors (ION1, ..., ION6) while executing the software (S),
and thereby executing the first subset (T1K1-1, T1K1-2) on the first interface processor (ION1) at a first cycle rate and executing the second subset (T1K2-1) on the second interface processor (ION4) at a second cycle rate;
and configuring the first task (TK1) for reading and processing the input data placed by the first subset (T1K1-1, T1K1-2) and by the second subset (T1K2-1) during the executing of the software (S).

13. The computer system (C) according to claim 12, configured for performing a method according to any one of the claims 2 through 11.

## Revendications

1. Procédé pour gérer des données d'entrée d'un système d'ordinateur (C) au moyen d'une unité d'interface (IO) qui comprend au moins un premier processeur d'interface (ION1) et un second processeur d'interface (ION4), chaque processeur d'interface (ION1, ..., ION6) de l'unité d'interface (IO) étant programmable et configurable par programmation pour lire une date d'entrée enregistrée par une périphérie (PER) du système d'ordinateur dans un port d'entrée de données (IN1, ..., IN6) de l'unité d'interface (IO) et l'enregistrer à une adresse de mémoire pouvant être lue par un processeur (P) du système d'ordinateur (C),
ou pour lire une date d'entrée enregistrée par la périphérie (PER) dans un port d'entrée de données (IN1, ..., IN6) de l'unité d'interface (IO), prétraiter la date d'entrée et l'enregistrer à une adresse de mémoire lisible par le processeur (P) du système d'ordinateur (C),
dans lequel une première connexion de données (DL1) est établie entre la périphérie (PER) et une multitude de ports d'entrée de données (IN1, ..., IN6) de l'unité d'interface (IO) et la périphérie (PER) est configurée pour enregistrer des données d'entrée dans au moins un port d'entrée de données (IN1, ..., IN6) de la multitude de ports d'entrée de données (IN1, ..., IN6) à l'aide de la première connexion de données (DL1) ;
une seconde connexion de données (DL2) est établie par l'unité d'interface (IO) entre l'unité d'interface (IO) et le processeur (P) du système d'ordinateur (C) pour enregistrer des données d'entrée à une adresse de mémoire pouvant être lue par le processeur (P) du système d'ordinateur (C) ;
un logiciel (S) est programmé sur le processeur (P) du système d'ordinateur (C), lequel logiciel comprend au moins une première tâche (TK1) configurée pour traiter des données d'entrée transmises par l'unité interface (IO) ;
une multitude de routines logicielles (SR) comprenant au moins deux routines logicielles est créé, chaque routine logicielle (SR) étant configurée pour programmer un processeur d'interface (ION1, ..., ION6) pour la lecture d'une date d'entrée à partir d'un port d'entrée de données (IN1,..., IN6) de l'unité interface (IO) et l'enregistrement de la date d'entrée à une adresse de mémoire pouvant être lue par le processeur (P) du système d'ordinateur (C)
ou pour programmer un processeur d'interface (ION1, ..., ION6) pour la lecture d'une date d'entrée à partir d'un port d'entrée de données (IN1, ..., IN6) de l'unité d'interface (IO), le prétraitement de la date d'entrée et l'enregistrement de la date d'entrée à une adresse de mémoire pouvant être lue par le processeur (P) du système d'ordinateur (C) ;
**caractérisé en ce que**
un premier sous-ensemble (T1K1-1, T1K1-2) de la multitude de routines logicielles (SR) est affecté à une première catégorie prévue pour la transmission de données synchrone avec la tâche et le premier processeur d'interface (ION1) est programmé avec le premier sous-ensemble (T1K1-1, T1K1-2),
sachant que la transmission de données synchrone avec la tâche signifie que l'exécution des routines logicielles sur un processeur d'interface (ION1, ..., ION6) est synchronisée avec la tâche (TK1, ..., TK3) pour laquelle les routines logicielles programmées sur le processeur d'interface (ION1, ..., ION6) respectif ont été créées et pour laquelle les routines logicielles préparent les données d'entrée ;
un second sous-ensemble (T1K2-2) de la multitude de routines logicielles (SR) est affecté à une seconde catégorie prévue pour la transmission continue de données et le second processeur d'interface (ION4) est programmé avec le second sous-ensemble,
sachant que la transmission continue de données signifie qu'un processeur d'interface (ION1, ..., ION6) transmet au processeur (P) les données d'entrée enregistrées dans un port d'entrée de données (IN1, ..., IN6) sans prendre en compte la cadence cyclique d'une tâche (TK1, ..., TK3) exécutée sur le processeur (P) ;
l'exécution du logiciel (S) par le processeur (P) du système d'ordinateur (C) est démarrée ;
pendant l'exécution du logiciel (S) par le processeur (P) du système d'ordinateur (C), les routines logicielles (SR) sont exécutées de manière cyclique par les processeurs d'interface (ION1, ..., 106),
sachant que le premier processeur d'interface (ION1) est configuré pour traiter le premier sous-ensemble (T1K1-1, T1K1-2) à une première cadence de cycle et le second processeur d'interface (ION4) est configuré pour traiter le second sous-ensemble (T1K2-1) à une seconde cadence de cycle
et la première tâche (TK1) est configurée pour, pendant l'exécution du logiciel (S) par le processeur (P) du système d'ordinateur (C), lire et traiter les données d'entrée enregistrées par le premier sous-ensemble (T1K1-1, T1K1-2) et par le second sous-ensemble (T1K2-1).

2. Procédé selon la revendication 1, dans lequel la première cadence de cycle est sélectionnée pour être synchrone avec la cadence de cycle de la première tâche (TK1) et la seconde cadence de cycle est sélectionnée pour être synchrone avec une cadence d'enregistrement de données, à laquelle des données d'entrée sont enregistrées dans un port d'entrée de données (IN1, ..., IN6) à partir duquel le second processeur d'interface (ION4) lit des données d'entrée en raison de sa programmation.

3. Procédé selon la revendication 1 ou 2, dans lequel le premier processeur d'interface (ION1) est configuré pour traiter le premier sous-ensemble (T1K1-1, T1K1-2) dans chaque cycle dans son intégralité et sans interruption
et le second processeur d'interface (ION4) est configuré pour traiter le second sous-ensemble (T1K2-1) dans chaque cycle dans son intégralité et sans interruption,
en particulier, dans lequel le premier sous-ensemble (T1K1-1, T1K1-2) et le second sous-ensemble (T1K1-2) sont respectivement regroupés en une séquence compacte d'instructions machine
et le premier processeur d'interface (ION1) et le second processeur d'interface (ION4) sont configurés pour exécuter intégralement la séquence respective dans chaque cycle et pour exécuter une seule fois par cycle chaque instruction machine contenue dans la séquence.

4. Procédé selon l'une des revendications précédentes, dans lequel au moins le premier processeur d'interface (ION1) est affecté à la première tâche (TK1) ;
les processeurs d'interface (ION1) affectés à la première tâche (TK1) sont programmés avec des routines logicielles (SR) de la première catégorie ;
les données d'entrée enregistrées par les processeurs d'interface affectés à la première tâche (TK1) sont lues exclusivement par la première tâche (TK1) ;
le logiciel (S) comprend une seconde tâche (TK2) et au moins un processeur d'interface (ION2) est affecté à la seconde tâche (TK2) ;
les processeurs d'interface (ION2) affectés à la seconde tâche (TK2) sont programmés avec des routines logicielles (SR) de la première catégorie ;
les données d'entrée enregistrées par les processeurs d'interface (ION2) affectés à la seconde tâche (TK2) sont lues exclusivement par la seconde tâche (TK2) ; et
les routines logicielles de la seconde catégorie sont réparties et programmées sur des processeurs d'interface (ION4, ..., ION6) qui ne sont affectés à aucune tâche (T1, ..., TK3).

5. Procédé selon la revendication 4, dans lequel les processeurs d'interface (ION1, ..., ION3) affectés à une tâche (TK1, ..., TK3) sont programmés exclusivement avec les routines logicielles (SR) de la première catégorie
et les processeurs d'interface (ION4, ..., ION6) affectés à aucune tâche (TK1, ..., TK3) sont programmés exclusivement avec des routines logicielles (SR) de la seconde catégorie ou ne sont programmés avec aucune routine logicielle (SR).

6. Procédé selon la revendication 4 ou 5, dans lequel les routines logicielles (SR) pour la programmation de processeurs d'interface (ION1, ..., ION6) pour l'enregistrement des données d'entrée pour la lecture desquelles la première tâche (TK1) est configurée, sont créées par la première tâche
et la première tâche (TK1) affecte chaque routine logicielle (T1K1-1, T1K1-2, T1K2-1, ..., T1K2-4) créée par la première tâche (TK1) à la première catégorie ou à la seconde catégorie,
et les routines logicielles (SR) pour la programmation de processeurs d'interface (ION1, ..., ION6) pour l'enregistrement des données d'entrée pour la lecture desquelles la seconde tâche (TK2) est configurée, sont créées par la seconde tâche
et la seconde tâche (TK2) affecte chaque routine logicielle (T2K1-1, ..., T2K1-3, T2K2-1) créée par la seconde tâche (TK2) à la première catégorie ou à la seconde catégorie.

7. Procédé selon l'une des revendications 4 à 6, dans lequel les routines logicielles (SR) de la seconde catégorie sont réparties manuellement sur les processeurs d'interface (ION1, ..., ION6).

8. Procédé selon l'une des revendications 4 à 6, dans lequel les routines logicielles (SR) de la seconde catégorie sont réparties entre les processeurs d'interface (ION1, ..., ION6) de sorte que, pour chaque processeur d'interface (ION4, ..., ION6) programmé avec des routines logicielles (SR) de la seconde catégorie, le temps d'exécution maximal de l'ensemble de toutes les routines logicielles (SR) de la seconde catégorie programmées sur le processeur d'interface soit inférieur à un temps de lecture acceptable déterminé avant le début de l'exécution des routines logicielles (SR).

9. Procédé selon la revendication 8, dans lequel les routines logicielles (SR) de la seconde catégorie sont réparties entre les processeurs d'interface (ION1, ..., ION6) de sorte que le temps d'exécution maximal de chaque processeur d'interface (ION4, ..., ION6) programmé avec des routines logicielles (SR) de la seconde catégorie soit inférieur au temps de lecture acceptable déterminé pour le processeur d'interface moins une inexactitude temporelle.

10. Procédé selon la revendication 8 ou 9, dans lequel le temps de lecture acceptable est alloué de manière identique pour tous les processeurs d'interface (ION1, ..., ION6) et les routines logicielles (SR) de la seconde catégorie sont réparties, en particulier, automatiquement à l'aide d'une routine de distribution de logiciel, entre les processeurs d'interface (ION1, ..., ION6) de sorte que parmi les processeurs d'interface (ION4, ..., ION6) qui sont programmés avec des routines logicielles (SR) de la seconde catégorie, la différence entre le temps d'exécution maximal du processeur d'interface avec le temps d'exécution maximal le plus grand et celui du processeur d'interface avec le temps d'exécution maximal le plus petit soit minimale.

11. Procédé selon la revendication 8 ou 9, dans lequel un temps de lecture acceptable individuelle est déterminé, en particulier, à l'aide d'un logiciel de configuration, pour chaque port d'entrée de données (IN1, ..., IN6) de l'unité d'interface (IO),
les routines logicielles (SR) de la seconde catégorie sont réparties manuellement, par un utilisateur, sur les processeurs d'interface (ION1, ..., ION6),
et il est vérifié pour chaque processeur d'interface (ION4, ..., ION6) programmé avec des routines logicielles (SR) de la seconde catégorie si le temps d'exécution maximal du processeur d'interface (ION4, ..., ION6) respectif est inférieur au temps de lecture acceptable de tous les ports d'entrée de données (IN1, ..., IN6) à partir desquels le processeur d'interface (ION4, ..., ION6) lit des données d'entrée en raison de sa programmation.

12. Système d'ordinateur (C) avec un processeur (P) et une unité d'interface (IO) qui comporte au moins un premier processeur d'interface (ION1) et un second processeur d'interface (ION4), dans lequel chaque processeur d'interface (ION1, ..., ION6) de l'unité d'interface (IO) est programmable et configurable par programmation pour lire une date d'entrée enregistrée par une périphérie (PER) du système d'ordinateur (C) dans un port d'entrée de données (IN1, ..., IN6) de l'unité d'interface (IO) à l'aide d'une première connexion de données (DL1) et l'enregistrer à une adresse de mémoire lisible par le processeur (P) du système d'ordinateur (C),
ou pour lire une date d'entrée enregistrée par la périphérie (PER) à l'aide de la première connexion de données (DL1) dans un port d'entrée de données (IN1, ..., IN6) de l'unité d'interface, prétraiter la date d'entrée et l'enregistrer à une adresse de mémoire lisible par le processeur du système d'ordinateur ;
une seconde connexion de données (DL2) est établie par l'unité d'interface (IO) entre l'unité d'interface (IO) et le processeur (P) du système d'ordinateur (C) pour enregistrer des données d'entrée à une adresse de mémoire pouvant être lue par le processeur (P) du système d'ordinateur (C) ;
un logiciel (S) est enregistré sur le processeur (P) du système d'ordinateur (C), lequel logiciel comprend au moins une première tâche (TK1) configurée pour traiter des données d'entrée transmises par l'unité interface (IO) ;
le système d'ordinateur (C) est configuré pour créer une multitude de deux ou davantage de routines logicielles (SR) et configurer chaque routine logicielle (SR) pour programmer un processeur d'interface (ION1, ..., ION6) pour la lecture d'une date d'entrée à partir d'un port d'entrée de données (IN1, ..., IN6) de l'unité interface (IO) et l'enregistrement de la date d'entrée à une adresse de mémoire pouvant être lue par le processeur (P) du système d'ordinateur (C)
ou pour programmer un processeur d'interface (ION1, ..., ION6) pour la lecture d'une date d'entrée à partir d'un port d'entrée de données (IN1, ..., IN6) de l'unité d'interface (IO), le prétraitement de la date d'entrée et l'enregistrement de la date d'entrée à une adresse de mémoire pouvant être lue par le processeur (P) du système d'ordinateur (C) ;
**caractérisé en ce que**
le système d'ordinateur (C) est configuré pour affecter un premier sous-ensemble (T1K1-1, T1K1-2) de la multitude de routines logicielles (SR) à une première catégorie prévue pour la transmission de données synchrone avec la tâche et programmer le premier processeur d'interface (ION1) avec le premier sous-ensemble (T1K1-1, T1K1-2),
sachant que la transmission de données synchrone avec la tâche signifie que l'exécution des routines logicielles sur un processeur d'interface (ION1, ..., ION6) est synchronisée avec la tâche (TK1, ..., TK3) pour laquelle les routines logicielles programmées sur le processeur d'interface (ION1, ..., ION6) respectif ont été créées et pour laquelle les routines logicielles préparent les données d'entrée ;
affecter un second sous-ensemble (T1K2-1) de la multitude de routines logicielles (SR) à une seconde catégorie prévue pour la transmission continue de données et programmer le second processeur d'interface (ION4) avec le second sous-ensemble (T1K2-1),
sachant que la transmission continue de données signifie qu'un processeur d'interface (ION1, ..., ION6) transmet au processeur (P) les données d'entrée enregistrées dans un port d'entrée de données (IN1, ..., IN6) sans prendre en compte la cadence cyclique d'une tâche (TK1, ..., TK3) exécutée sur le processeur (P) ;
exécuter le logiciel (S) au moyen du processeur (P) du système d'ordinateur (C), pendant l'exécution du logiciel (S), exécuter de manière cyclique les routines logicielles (SR) au moyen des processeurs d'interface (ION1, ..., ION6)
et, dans ce contexte, traiter le premier sous-ensemble (T1K1-1, T1K1-2) sur le premier processeur d'interface (ION1) à une première cadence de cycle et traiter le second sous-ensemble (T1K2-1) sur le second processeur d'interface (ION4) à une seconde cadence de cycle ;
et configurer la première tâche (TK1) pour, pendant l'exécution du logiciel (S), lire et traiter les données d'entrée enregistrées par le premier sous-ensemble (T1K1-1, T1K1-2) et par le second sous-ensemble (T1K2-1).

13. Système d'ordinateur (C) selon la revendication 12, qui est configuré pour exécuter un procédé selon l'une des revendications 2 à 11.
